# EUROPEAN PATENT APPLICATION

(11) **EP 4 391 398 A1**
(43) Date of publication of application: **26.06.2024**
(21) Application number: 22882738.2
(22) Date of filing: 13.10.2022
(51) Int. Cl.: H04B 3/04, H04W 72/04

(54) **POWER LINE COMMUNICATION METHOD, MAIN ROUTING DEVICE, AND APPARATUS**

(30) Priority: 19.10.2021 CN 202111215714
(71) Applicant: Huawei Technologies Co., Ltd., Shenzhen, Guangdong 518129 (CN)
(72) Inventor: TAO, Shuangming, Shenzhen, Guangdong 518129 (CN); HU, Weiwei, Shenzhen, Guangdong 518129 (CN)
(74) Representative: Isarpatent
(86) International application number: PCT/CN2022/125120
(87) International publication number: WO 2023/066128

(57) **Abstract**

This application is applicable to the field of communication control, and provides a power line communication method, a primary routing device, and an apparatus. In the method provided in this application, the primary routing device may obtain a device access status of a first secondary routing device. If the device access status of the first secondary routing device is a first state, it indicates that no user equipment accesses the first secondary routing device. In this case, the primary routing device may allocate a transmission opportunity not in a first time segment but in a second time segment of a transmission management cycle to the first secondary routing device. This reduces transmission opportunities of the first secondary routing device, avoids a waste of excessive time slots by the first secondary routing device, improves bandwidth utilization of a power line network, and has strong practicability and usability.

## Description

This application claims priority to Chinese Patent Application No. 202111215714.0, filed with the China National Intellectual Property Administration on October 19, 2021 and entitled "POWER LINE COMMUNICATION METHOD, PRIMARY ROUTING DEVICE, AND APPARATUS", which is incorporated herein by reference in its entirety.

### TECHNICAL FIELD

This application relates to the field of communication control, and in particular, to a power line communication method, a primary routing device, and an apparatus.

### BACKGROUND

Power line communication (Power Line Communication, PLC) is a communication technology that uses a power line as a transmission medium to implement data transmission and information exchange.

In an existing PLC technology, a domain master node usually uses a shared transmission solution, and equally allocates a transmission opportunity to each node in a power line network.

In other words, even if some idle nodes in the power line network have no data transmission requirement, the domain master node allocates transmission opportunities to the idle nodes. Consequently, time slots corresponding to these transmission opportunities are wasted, and bandwidth utilization is low.

### SUMMARY

Embodiments of this application provide a power line communication method, a primary routing device, and an apparatus, to resolve problems that a large quantity of time slots are wasted and bandwidth utilization is low by using an existing power line communication technology.

According to a first aspect, an embodiment of this application provides a power line communication method. The method is applied to a primary routing device, and includes:
obtaining a device access status of a first secondary routing device; and
allocating a transmission opportunity not in a first time segment but in a second time segment of a transmission management cycle to the first secondary routing device if the device access status of the first secondary routing device is a first state, where
the primary routing device and the first secondary routing device access a same power line network, the first state indicates that no user equipment accesses the first secondary routing device, and the first time segment and the second time segment are non-intersecting time segments.

It should be noted that the primary routing device is an electronic device that has a routing function and a management function. A secondary routing device is an electronic device that has a routing function but does not have a management function. The first secondary routing device may be understood as a secondary routing device that accesses a same power line network as the primary routing device.

After the primary routing device enters a working state, the device access status of the first secondary routing device may be obtained.

The device access status may be requested by the primary routing device from the first secondary routing device, or the device access status may alternatively be actively sent by the first secondary routing device to the primary routing device.

The device access status may include a first state or a second state. The first state indicates that user equipment accesses the first secondary routing device, and the second state indicates that no user equipment accesses the first secondary routing device.

The user equipment is an electronic device other than the primary routing device and the secondary routing device.

When a device status of the first secondary routing device is the first state, it indicates that no user equipment accesses the first secondary routing device, and the first secondary routing device has no service data to be transmitted.

In this case, the primary routing device may determine the first secondary routing device as an idle device, and allocate the transmission opportunity not in the first time segment but in the second time segment of the transmission management cycle to the first secondary routing device.

In other words, the primary routing device does not equally allocate transmission opportunities of the entire transmission management cycle to the first secondary routing device, but allocates transmission opportunities in only a part of time segments of the transmission management cycle to the first secondary routing device.

In the foregoing manner, the primary routing device may reduce transmission opportunities of the idle device, and reduce time slots wasted by the idle device. This improves bandwidth utilization of the power line network, and has relatively strong usability and practicability.

In a possible implementation of the first aspect, after the obtaining a device access status of a first secondary routing device, the method further includes:
if the device access status of the first secondary routing device is a second state, allocating the transmission opportunity in the first time segment and the transmission opportunity in the second time segment to the first secondary routing device, where the second state indicates that user equipment accesses the first secondary routing device.

It should be noted that, when the device status of the first secondary routing device is the second state, it indicates that user equipment accesses the first secondary routing device, and the first secondary routing device may have service data to be transmitted.

In this case, the primary routing device may determine the first secondary routing device as an active device, and allocate the transmission opportunity in the first time segment and the transmission opportunity in the second time segment to the active device, to ensure transmission efficiency of the active device.

In a possible implementation of the first aspect, after the allocating a transmission opportunity not in a first time segment but in a second time segment of a transmission management cycle to the first secondary routing device if the device access status of the first secondary routing device is a first state, the method further includes:
when a first status change notification sent by the first secondary routing device is received, allocating the transmission opportunity in the first time segment and the transmission opportunity in the second time segment to the first secondary routing device.

It should be noted that, in an actual application scenario, the user equipment may access or disconnect from the secondary routing device at any time.

Therefore, a device access status of the secondary routing device may be affected by the user equipment. To be specific, the device access status changes from the first state to the second state, or changes from the second state to the first state.

When the device access status of the secondary routing device changes, the secondary routing device may send a status change notification to the primary routing device, where the status change notification indicates that a device status of the secondary routing device changes.

Therefore, when the primary routing device receives the first status change notification sent by the first secondary routing device, it indicates that the device access status of the first secondary routing device changes from the first state to the second state.

In this case, to ensure transmission efficiency of the first secondary routing device, the primary routing device may allocate the transmission opportunity in the first time segment and the transmission opportunity in the second time segment to the first secondary routing device.

In a possible implementation of the first aspect, after the allocating the transmission opportunity in the first time segment and the transmission opportunity in the second time segment to the first secondary routing device, the method further includes:
when a second status change notification sent by the first secondary routing device is received, stopping allocating the transmission opportunity in the first time segment to the first secondary routing device, and allocating the transmission opportunity in the second time segment to the first secondary routing device.

It should be noted that, when the primary routing device receives the second status change notification sent by the first secondary routing device, it indicates that the device access status of the first secondary routing device changes from the second state to the first state.

In this case, the first secondary routing device has no service data to be transmitted, and if the primary routing device continues allocating the transmission opportunity in the first time segment and the transmission opportunity in the second time segment to the first secondary routing device, a relatively large quantity of time slots may be wasted.

Therefore, the primary routing device may stop allocating the transmission opportunity in the first time segment to the first secondary routing device, allocate the transmission opportunity in the second time segment to the first secondary routing device, to reduce transmission opportunities of the first secondary routing device. This reduces wasted time slots and improves bandwidth utilization of the power line network.

In a possible implementation of the first aspect, the method further includes:
when it is detected that a second secondary routing device accesses the power line network, allocating the transmission opportunity not in the first time segment but in the second time segment to the second secondary routing device.

It should be noted that, in addition to the device access status that may change, the secondary routing device may also access or disconnect from the power line network.

The second secondary routing device is a secondary routing device that newly accesses the power line network. When the primary routing device detects that the second secondary routing device accesses the power line network, because usually no user equipment accesses the secondary routing device that newly accesses the power line network, the primary routing device may consider the second secondary routing device as an idle device by default, and allocate the transmission opportunity not in the first time segment but in the second time segment to the second secondary routing device. This reduces wasted time slots and improves bandwidth utilization of the power line network.

In a possible implementation of the first aspect, after the allocating the transmission opportunity not in the first time segment but in the second time segment to the second secondary routing device, the method further includes:
when a third status change notification sent by the second secondary routing device is received, allocating the transmission opportunity in the first time segment and the transmission opportunity in the second time segment to the second secondary routing device.

It should be noted that, when user equipment accesses the second secondary routing device, the second secondary routing device may send a third change notification to the primary routing device.

When the primary routing device receives the third change notification, the primary routing device may determine that the user equipment accesses the second secondary routing device, where the second secondary routing device is an active device.

In this case, the primary routing device may allocate the transmission opportunity in the first time segment and the transmission opportunity in the second time segment to the second secondary routing device, to ensure transmission efficiency of the second secondary routing device.

In a possible implementation of the first aspect, the method further includes:
when it is detected that a second secondary routing device accesses the power line network, allocating the transmission opportunity in the first time segment and the transmission opportunity in the second time segment to the second secondary routing device; and
if a device access status of the second secondary routing device is not obtained within preset duration, or a device access status of the second secondary routing device is a third state, stopping allocating the transmission opportunity in the first time segment to the second secondary routing device, but allocating the transmission opportunity in the second time segment to the second secondary routing device, where the third state indicates that no user equipment accesses the second secondary routing device.

It should be noted that in some other scenarios, when the primary routing device detects that the second secondary routing device accesses the power line network, the primary routing device may also first allocate the transmission opportunity in the first time segment and the transmission opportunity in the second time segment to the second secondary routing device, to ensure transmission efficiency of the second secondary routing device.

Then, the primary routing device waits for the preset duration. If the primary routing device does not receive the device access status of the second secondary routing device within the preset duration, or the device access status received by the primary routing device is the third state, the primary routing device may determine the second secondary routing device as an idle device, stop allocating the transmission opportunity in the first time segment to the second secondary routing device, but allocate the transmission opportunity in the second time segment to the second secondary routing device. This reduces transmission opportunities of the second secondary routing device, reduces wasted time slots, and improves bandwidth utilization of the power line network.

If the primary routing device receives the device access status of the second secondary routing device within the preset duration, and the device access status is a fourth state, the primary routing device may keep the previous configuration solution without changing.

The third state indicates that no user equipment accesses the second secondary routing device, and the fourth state indicates that user equipment accesses the second secondary routing device.

In a possible implementation of the first aspect, the method further includes:
when the first secondary routing device disconnects from the power line network, stopping allocating the transmission opportunity in the first time segment and the transmission opportunity in the second time segment to the first secondary routing device.

It should be noted that, when the primary routing device finds that the first secondary routing device disconnects from the power line network, it indicates that the first secondary routing device no longer performs data transmission by using the power line network. In this case, the primary routing device may stop allocating the transmission opportunity in the first time segment and the transmission opportunity in the second time segment to the first secondary routing device. This reduces invalid transmission opportunities, reduces wasted time slots, and improves bandwidth utilization of the power line network.

In a possible implementation of the first aspect, the obtaining a device access status of a first secondary routing device includes:
obtaining the device access status of the first secondary routing device through a status transmission channel, where the status transmission channel includes one or more of the power line network, a Bluetooth connection, a Wi-Fi connection, a universal serial bus connection, and a network cable connection.

It should be noted that the primary routing device may obtain a device access status of each secondary routing device through the status transmission channel.

The status transmission channel may include one or more of the power line network, the Bluetooth connection, the Wi-Fi connection, the universal serial bus connection, and the network cable connection.

According to a second aspect, an embodiment of this application provides a power line communication apparatus. The apparatus is applied to a primary routing device, and includes:
a status obtaining module, configured to obtain a device access status of a first secondary routing device; and
an idle setting module, configured to: allocate a transmission opportunity not in a first time segment but in a second time segment of a transmission management cycle to the first secondary routing device if the device access status of the first secondary routing device is a first state, where
the primary routing device and the first secondary routing device access a same power line network, the first state indicates that no user equipment accesses the first secondary routing device, and the first time segment and the second time segment are non-intersecting time segments.

In a possible implementation of the second aspect, the apparatus further includes:
an active setting module, configured to: if the device access status of the first secondary routing device is a second state, allocate the transmission opportunity in the first time segment and the transmission opportunity in the second time segment to the first secondary routing device, where the second state indicates that user equipment accesses the first secondary routing device.

In a possible implementation of the second aspect, the apparatus further includes:
a first changing module, configured to: when a first status change notification sent by the first secondary routing device is received, allocate the transmission opportunity in the first time segment and the transmission opportunity in the second time segment to the first secondary routing device.

In a possible implementation of the second aspect, the apparatus further includes:
a second changing module, configured to: when a second status change notification sent by the first secondary routing device is received, stop allocating the transmission opportunity in the first time segment to the first secondary routing device, but allocate the transmission opportunity in the second time segment to the first secondary routing device.

In a possible implementation of the second aspect, the apparatus further includes:
a first access module, configured to: when it is detected that a second secondary routing device accesses the power line network, allocate the transmission opportunity not in the first time segment but in the second time segment to the second secondary routing device.

In a possible implementation of the second aspect, the apparatus further includes:
a third changing module, configured to: when a third status change notification sent by the second secondary routing device is received, allocate the transmission opportunity in the first time segment and the transmission opportunity in the second time segment to the second secondary routing device.

In a possible implementation of the second aspect, the apparatus further includes:
a second access module, configured to: when it is detected that a second secondary routing device accesses the power line network, allocate the transmission opportunity in the first time segment and the transmission opportunity in the second time segment to the second secondary routing device; and
a fourth changing module, configured to: if a device access status of the second secondary routing device is not obtained within preset duration, or a device access status of the second secondary routing device is a third state, stop allocating the transmission opportunity in the first time segment to the second secondary routing device, but allocate the transmission opportunity in the second time segment to the second secondary routing device, where the third state indicates that no user equipment accesses the second secondary routing device.

In a possible implementation of the second aspect, the apparatus further includes:
a device disconnection module, configured to: when the first secondary routing device disconnects from the power line network, stop allocating the transmission opportunity in the first time segment and the transmission opportunity in the second time segment to the first secondary routing device.

In a possible implementation of the second aspect, the status obtaining module is specifically configured to obtain the device access status of the first secondary routing device through a status transmission channel, where the status transmission channel includes one or more of the power line network, a Bluetooth connection, a Wi-Fi connection, a universal serial bus connection, and a network cable connection.

According to a third aspect, an embodiment of this application provides a primary routing device, including a memory, a processor, and a computer program that is stored in the memory and that can be run on the processor. When the processor is configured to execute the computer program, the method according to any one of the first aspect and the possible implementations of the first aspect is implemented.

According to a fourth aspect, an embodiment of this application provides a computer-readable storage medium, where the computer-readable storage medium is configured to store a computer program. When the computer program is executed by a processor, the method according to any one of the first aspect and the possible implementations of the first aspect is implemented.

According to a fifth aspect, an embodiment of this application provides a computer program product. When the computer program product is configured to run on a primary routing device, the primary routing device is enabled to perform the method according to any one of the first aspect and the possible implementations of the first aspect.

According to a sixth aspect, an embodiment of this application provides a chip system. The chip system includes a memory and a processor, and the processor is configured to execute a computer program stored in the memory, to implement the method according to any one of the first aspect and the possible implementations of the first aspect.

Compared with the conventional technology, embodiments of this application have the following beneficial effects.

In the power line communication method in this application, the primary routing device may obtain the device access status of the first secondary routing device. When the device access status of the first secondary routing device is the first state, it indicates that no user equipment accesses the first secondary routing device, and no service data needs to be transmitted.

In this case, the primary routing device may allocate the transmission opportunity not in the first time segment but in the second time segment of the transmission management cycle to the first secondary routing device, where the first time segment and the second time segment are non-intersecting time segments.

In other words, the primary routing device does not equally allocate transmission opportunities of the entire transmission management cycle to the first secondary routing device, but allocates transmission opportunities in only a part of time segments of the transmission management cycle to the first secondary routing device.

In the foregoing method, the primary routing device may reduce transmission opportunities allocated to the first secondary routing device, and reduce wasted time slots. This improves bandwidth utilization of the power line network, and has relatively strong usability and practicability.

### BRIEF DESCRIPTION OF DRAWINGS

FIG. 1 is a diagram of a system architecture of a power line communication system according to an embodiment of this application;
FIG. 2 is a schematic diagram of a structure of an electronic device according to an embodiment of this application;
FIG. 3 is a schematic diagram of a structure of an index frame according to an embodiment of this application;
FIG. 4 is a schematic diagram of window division according to an embodiment of this application;
FIG. 5 is a schematic diagram of a scenario according to an embodiment of this application;
FIG. 6 is a distribution diagram of time slots according to an embodiment of this application;
FIG. 7 is another distribution diagram of time slots according to an embodiment of this application;
FIG. 8 is another distribution diagram of time slots according to an embodiment of this application;
FIG. 9 is a schematic diagram of another scenario according to an embodiment of this application;
FIG. 10 is another distribution diagram of time slots according to an embodiment of this application;
FIG. 11 is another distribution diagram of time slots according to an embodiment of this application;
FIG. 12 is a schematic diagram of another scenario according to an embodiment of this application;
FIG. 13 is another distribution diagram of time slots according to an embodiment of this application;
FIG. 14 is another distribution diagram of time slots according to an embodiment of this application;
FIG. 15 is a schematic diagram of another scenario according to an embodiment of this application;
FIG. 16 is a schematic diagram of another scenario according to an embodiment of this application;
FIG. 17 is a schematic diagram of another scenario according to an embodiment of this application;
FIG. 18 is a schematic diagram of another scenario according to an embodiment of this application;
FIG. 19 is a schematic diagram of another scenario according to an embodiment of this application;
FIG. 20 is a schematic diagram of another scenario according to an embodiment of this application;
FIG. 21 is a schematic diagram of another scenario according to an embodiment of this application;
FIG. 22 is another distribution diagram of time slots according to an embodiment of this application;
FIG. 23 is another distribution diagram of time slots according to an embodiment of this application;
FIG. 24 is a schematic diagram of another scenario according to an embodiment of this application;
FIG. 25 is another distribution diagram of time slots according to an embodiment of this application;
FIG. 26 is a schematic diagram of another scenario according to an embodiment of this application;
FIG. 27 is another distribution diagram of time slots according to an embodiment of this application;
FIG. 28 is another distribution diagram of time slots according to an embodiment of this application;
FIG. 29 is a schematic flowchart of a power line communication method according to an embodiment of this application; and
FIG. 30 is a schematic diagram of a structure of a power line communication apparatus according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and the appended claims of this application, the terms "first", "second", "third", and the like are merely intended for a purpose of differentiated description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized in other ways. The terms "include", "have", and their variants all mean "include but are not limited to", unless otherwise specifically emphasized in another manner.

Power line communication (Power Line Communication, PLC) is a communication technology that uses a power line as a transmission medium to implement data transmission and information exchange.

When an electronic device accesses a power line network, if the electronic device has a PLC function, the electronic device may broadcast data and receive data by using the power line network.

In the power line network, all nodes (namely, electronic devices accessing the power line network) have equal positions, and impact exerted by any node on a power line may be sensed by another node in the power line network.

Therefore, when a plurality of nodes in the power line network transmit data at a same moment, the data transmitted by the plurality of nodes may interfere with each other, affecting a transmission effect.

For example, it is assumed that a device A and a device B access the power line network, and both the device A and the device B have the PLC function.

At a moment, the device A modulates, into a first signal, data that needs to be transmitted, and couples the first signal to the power line; and the device B modulates, into a second signal, data that needs to be transmitted, and couples the second signal to the power line.

In this case, the first signal and the second signal may interfere with each other, and are merged into a third signal.

When another node in the power line network receives the third signal, the another node may not be able to demodulate the third signal into the data that the device A and the device B want to transmit, causing a data transmission failure between the device A and the device B.

Therefore, to enable the nodes in the power line network to perform data transmission in an orderly manner, a domain master node having a management function in the power line network may equally allocate a transmission opportunity to each node, and the nodes may perform data transmission in turn according to a transmission sequence set by the domain master node.

For example, it is assumed that the power line network includes a first node, a second node, and a third node, and the domain master node is the second node. In this case, the domain master node may allocate transmission opportunities in a transmission management cycle to the first node, the second node, and the third node, and set a transmission sequence of the first node, the second node, and the third node to third node-first node-second node.

When the transmission management cycle arrives, the first node, the second node, and the third node may sequentially perform data transmission according to the foregoing transmission sequence. According to the foregoing transmission sequence, the third node first performs data transmission; after the third node completes transmission, it is the turn of the first node to perform data transmission; after the first node completes transmission, it is the turn of the second node to perform data transmission; and after the second node completes transmission, it is the turn of the third node to perform data transmission again.

In the foregoing manner, the nodes may perform data transmission in turn, to avoid mutual interference between data transmitted by the nodes. However, because the domain master node equally allocates a transmission opportunity to each node, that is, even if some idle nodes have no data transmission requirement, the domain master node also allocates transmission opportunities to these idle nodes.

According to the PLC standard, each transmission opportunity has a minimum transmission time slot. Therefore, when it is the turn of a transmission opportunity of an idle node, even if the idle node has no data to be transmitted, a next node can consider by default that the idle node abandons a current transmission opportunity only after waiting for the minimum transmission time slot, and perform data transmission.

For example, refer to the foregoing example. It is assumed that after the first node completes transmission, it is the turn of a transmission opportunity of the second node. However, the second node has no data to be transmitted, and therefore the second node keeps silent.

After the first node transmits the data, even if the second node has no data to be transmitted, the third node needs to wait for the minimum transmission time slot. After the third node waits for the minimum transmission time slot, if the second node still does not perform data transmission, the third node may consider by default that the second node abandons a current transmission opportunity, and the third node starts to perform data transmission. The minimum transmission time slot that the third node waits for may be considered as a wasted time slot.

Therefore, when there are a large quantity of idle nodes in the power line network, if the domain master node allocates transmission opportunities in the foregoing manner, a large quantity of time slots may be wasted, and bandwidth utilization of the power line network is severely reduced.

In view of this, embodiments of this application provide a power line communication method. A primary routing device may dynamically adjust a transmission opportunity of a secondary routing device based on a device access status of the secondary routing device, and reduce wasted time slots. This improves bandwidth utilization and has relatively strong usability and practicability.

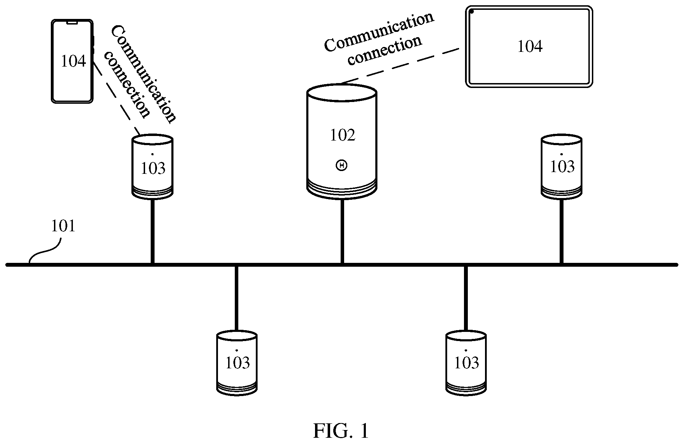

First, refer to FIG. 1. FIG. 1 shows an example of a power line communication system applicable to an embodiment of this application.

As shown in FIG. 1, the power line communication system may include a power line network 101, a primary routing device 102, secondary routing devices 103, and user equipments 104.

The primary routing device 102 is an electronic device that has a routing function and a management function, and the primary routing device 102 may manage transmission opportunities of the primary routing device 102 and each secondary routing device 103 that access the power line network 101.

The secondary routing device 103 is an electronic device that has a routing function but does not have a management function.

The user equipment 104 is an electronic device other than the primary routing device 102 and the secondary routing device 103. The user equipment 104 may include one or more types of electronic devices such as a desktop computer, a notebook computer, a tablet computer, a mobile phone, a smart television, a smart large screen, a smart sound box, a smart air conditioner, a floor sweeping robot, a dishwasher, a smart lamp, a smart lock, a smart curtain, a lidar, a millimeter-wave radar, a smart lock, and a visual doorbell.

The primary routing device 102 and the secondary routing device 103 may directly access the power line network 101, and exchange data by using the power line network 101; and/or
the primary routing device 102 and the secondary routing device 103 may exchange data by using one or more of communication connections such as a Wi-Fi connection, a Bluetooth connection, a universal serial bus (universal serial bus, USB) connection, and a registered jack 45 (Registered Jack 45, RJ45) connection.

The user equipment 104 may access the primary routing device 102, and/or the user equipment 104 may access the secondary routing device 103.

When the user equipment 104 accesses the primary routing device 102/secondary routing device 103, the user equipment 104 may exchange data with the primary routing device 102/secondary routing device 103 by using one or more of communication connections such as the Wi-Fi connection, the Bluetooth connection, the USB connection, and the RJ45 connection.

In addition, when the primary routing device 102 accesses an internet access line, the primary routing device may receive uplink data transmitted by the secondary routing device 103 and/or the user equipment 104, and transmit the uplink data to the Internet through the internet access line; and/or
the primary routing device 102 may receive, through the internet access line, downlink data transmitted over the Internet, and forward the downlink data to the secondary routing device 103 and/or the user equipment 104.

The internet access line may include any one or more of an asymmetric digital subscriber line (Asymmetric Digital Subscriber Line, ADSL), a digital data network (digital data network, DDN) line, and an optical broadband line.

It may be understood that although FIG. 1 shows four secondary routing devices 103 and two user equipments 104, in an actual application scenario, the power line communication system may have more or fewer secondary routing devices 103 and user equipments 104 than those shown in FIG. 1. The secondary routing devices 103 and the user equipments 104 shown in FIG. 1 should not impose any limitation on a specific quantity of the secondary routing devices 103 and the user equipments 104.

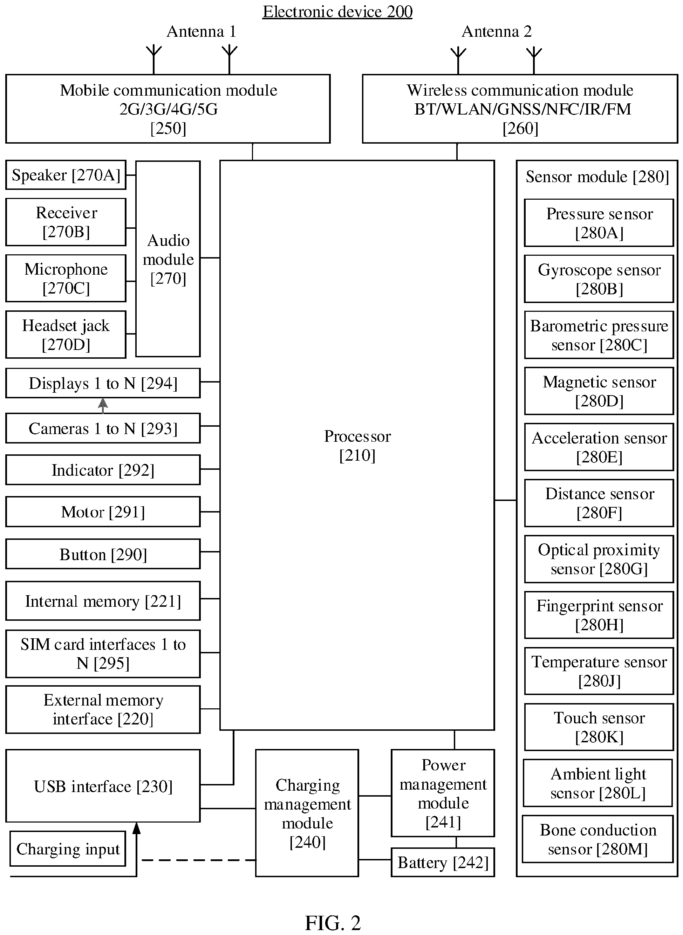

Refer to FIG. 2. FIG. 2 is a schematic diagram of an example of a structure of an electronic device 200 according to an embodiment of this application. The electronic device 200 may be the primary routing device 102, the secondary routing device 103, or the user equipment 104.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or neural a neural-network processing unit (neural-network processing unit, NPU). Different processing units may be independent, or may be integrated into one or more processors.

The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

In some embodiments, the processor 210 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronous serial bus, including a serial data line (serial data line, SDA) and a serial clock line (derail clock line, SCL). In some embodiments, the processor 210 may include a plurality of groups of I2C buses. The processor 210 may be separately coupled to the touch sensor 280K, a charger, a flashlight, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be used for audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transmit an audio signal to the wireless communication module 260 through the I2S interface, to implement a function of answering a call through a Bluetooth headset.

The PCM interface may also be used to perform audio communication, and sample, quantize, and code an analog signal. In some embodiments, the audio module 270 may be coupled to the wireless communication module 260 through a PCM bus interface. In some embodiments, the audio module 270 may also transmit an audio signal to the wireless communication module 260 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is generally configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music by using a Bluetooth headset.

The MIPI interface may be configured to connect the processor 210 to a peripheral device like the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the electronic device 200. The processor 210 communicates with the display 294 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may be alternatively configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to connect to a charger to charge the electronic device 200, or may be configured to transmit data between the electronic device 200 and a peripheral device, or may be configured to connect to a headset for playing audio through the headset. The interface may be further configured to connect to another electronic device like an AR device.

It may be understood that an interface connection relationship between the modules that is shown in this embodiment of the present invention is merely an example for description, and does not constitute a limitation on the structure of the electronic device 200. In some other embodiments of this application, the electronic device 200 may alternatively use an interface connection mode different from an interface connection mode in this embodiment, or a combination of a plurality of interface connection modes.

The charging management module 240 is configured to receive a charging input from a charger. The charger may be a wireless charger or a wired charger. In some embodiments of wired charging, the charging management module 240 may receive a charging input from the wired charger through the USB interface 230. In some embodiments of wireless charging, the charging management module 240 may receive a wireless charging input through a wireless charging coil of the electronic device 200. The charging management module 240 supplies power to the electronic device by using the power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a battery cycle count, and a battery health status (an electric leakage or impedance). In some other embodiments, the power management module 241 may alternatively be disposed in the processor 210. In some other embodiments, the power management module 241 and the charging management module 240 may alternatively be disposed in a same device.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to: transmit and receive electromagnetic wave signals. Each antenna in the electronic device 200 may be configured to cover one or more communication frequency bands. Different antennas may further be multiplexed to improve antenna utilization. For example, the antenna 1 may be multiplexed as a diversity antenna in a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules in the mobile communication module 250 may be disposed in the processor 210. In some embodiments, at least some functional modules in the mobile communication module 250 may be disposed in a same device as at least some modules in the processor 210.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 270A, the receiver 270B, or the like), or displays an image or a video by the display 294. In some embodiments, the modem processor may be an independent component. In some other embodiments, the modem processor may be independent of the processor 210, and is disposed in the same device with the mobile communication module 250 or another functional module.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processing module. The wireless communication module 260 receives an electromagnetic wave by the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 and the mobile communication module 250 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 may implement a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, or the like. The display 294 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 294, where N is a positive integer greater than 1.

The electronic device 200 may implement a photographing function by using the ISP, the camera 293, the video codec, the GPU, the display 294, the application processor, and the like.

The ISP is configured to process data fed back by the camera 293. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal of a standard format like RGB or YUV. In some embodiments, the electronic device 200 may include one or N cameras 293, where N is a positive integer greater than 1.

The digital signal processor is configured to process a digital signal. In addition to the digital image signal, the digital signal processor may further process another digital signal. For example, when the electronic device 200 selects a frequency, the digital signal processor is configured to perform Fourier transform on frequency energy.

The video codec is configured to compress or decompress a digital video. The electronic device 200 may support one or more types of video codecs. In this way, the electronic device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. The NPU can implement applications such as intelligent cognition of the electronic device 200, such as image recognition, facial recognition, speech recognition, and text understanding.

The external memory interface 220 may be configured to be connected to an external memory card like a micro SD card, to extend a storage capability of the electronic device 200. The external memory card communicates with the processor 210 through the external memory interface 220, to implement a data storage function. For example, files such as music and videos are stored in the external memory card.

The internal memory 221 may be configured to store computer-executable program code. The executable program code includes instructions. The internal memory 221 may include a program storage area and a data storage area. The program storage area may store an operating system, an application required by at least one function (for example, a voice playing function or an image playing function), and the like. The data storage area may store data (for example, audio data and an address book) and the like created during use of the electronic device 200. In addition, the internal memory 221 may include a high-speed random access memory, and may further include a nonvolatile memory, for example, at least one magnetic disk storage device, a flash storage device, or a universal flash storage (universal flash storage, UFS). The processor 210 runs the instruction stored in the internal memory 221 and/or the instruction stored in the memory disposed in the processor, to perform various function applications of the electronic device 200 and data processing.

The electronic device 200 may implement an audio function, for example, music playing and recording, through the audio module 270, the speaker 270A, the receiver 270B, the microphone 270C, the headset jack 270D, the application processor, and the like.

The audio module 270 is configured to convert digital audio information into an analog audio signal for output, and is further configured to convert an analog audio input into a digital audio signal. The audio module 270 may be further configured to: encode and decode an audio signal. In some embodiments, the audio module 270 may be disposed in the processor 210, or some functional modules in the audio module 270 are disposed in the processor 210.

The speaker 270A, also referred to as a "horn", is configured to convert an audio electrical signal into a sound signal. The electronic device 200 may be used to listen to music or answer a call in a hands-free mode over the speaker 270A.

The receiver 270B, also referred to as an "earpiece", is configured to convert the audio electrical signal into the sound signal. When a call is answered or speech information is received by using the electronic device 200, the receiver 270B may be put close to a human ear to listen to a speech.

The microphone 270C, also referred to as a "mike" or a "mic", is configured to convert a sound signal into an electrical signal. When making a call or sending voice information, a user may make a sound near the microphone 270C through the mouth of the user, to input the sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 294. There are a plurality of types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on a capacitance change. When a touch operation is performed on the display 294, the electronic device 200 detects intensity of the touch operation based on the pressure sensor 280A. The electronic device 200 may calculate a touch location based on a detection signal of the pressure sensor 280A. In some embodiments, touch operations that are performed on a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating an SMS message is executed.

The gyroscope sensor 280B may be configured to determine a motion posture of the electronic device 200. In some embodiments, an angular velocity of the electronic device 200 around three axes (namely, axes x, y, and z) may be determined by using the gyroscope sensor 280B. The gyroscope sensor 280B may be configured to implement image stabilization during photographing. For example, when the shutter is pressed, the gyroscope sensor 280B detects an angle at which the electronic device 200 jitters, calculates, based on the angle, a distance for which a lens module needs to compensate, and allows the lens to cancel the jitter of the electronic device 200 through reverse motion, to implement image stabilization. The gyroscope sensor 280B may also be used in a navigation scenario and a somatic game scenario.

The barometric pressure sensor 280C is configured to measure atmospheric pressure. In some embodiments, the electronic device 200 calculates an altitude by using a value of the atmospheric pressure measured by the barometric pressure sensor 280C, to assist positioning and navigation.

The magnetic sensor 280D includes a Hall effect sensor. The electronic device 200 may detect opening and closing of a flip leather case by using the magnetic sensor 280D. In some embodiments, when the electronic device 200 is a clamshell phone, the electronic device 200 may detect opening and closing of a flip cover based on the magnetic sensor 280D. Further, features such as automatic unlocking of the flip cover are set based on a detected opening or closing state of the leather case or a detected opening or closing state of the flip cover.

The acceleration sensor 280E may detect accelerations in various directions (usually on three axes) of the electronic device 200, and may detect magnitude and a direction of gravity when the electronic device 200 is static. The acceleration sensor 180E may be further configured to identify a posture of the electronic device, and is used in applications such as switching between a landscape mode and a portrait mode or a pedometer.

The distance sensor 280F is configured to measure a distance. The electronic device 200 may measure the distance in an infrared or a laser manner. In some embodiments, in a shooting scenario, the electronic device 200 may perform ranging by using the distance sensor 280F to implement fast focusing.

The optical proximity sensor 280G may include, for example, a light-emitting diode (LED) and an optical detector, like a photodiode. The light emitting diode may be an infrared light emitting diode. The electronic device 200 emits infrared light by using the light emitting diode. The electronic device 200 detects infrared reflected light from a nearby object by using the photodiode. When detecting plenty of reflected light, the electronic device 200 may determine that there is an object near the electronic device 200. When detecting insufficient reflected light, the electronic device 200 may determine that there is no object near the electronic device 200. The electronic device 200 may detect, by using the optical proximity sensor 280G, that a user holds the electronic device 200 close to an ear to make a call, to automatically turn off a screen for power saving. The optical proximity sensor 280G may also be used for automatic screen unlocking and locking in a smart cover mode or a pocket mode.

The ambient light sensor 280L is configured to sense ambient light brightness. The electronic device 200 may adaptively adjust brightness of the display 294 based on the sensed ambient light brightness. The ambient light sensor 280L may also be configured to automatically adjust white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may use a feature of the collected fingerprint to implement fingerprint-based unlocking, application access locking, fingerprint-based photographing, fingerprint-based call answering, and the like.

The temperature sensor 280J is configured to detect a temperature. In some embodiments, the electronic device 200 executes a temperature processing policy through the temperature detected by the temperature sensor 280J. For example, when the temperature reported by the temperature sensor 280J exceeds a threshold, the electronic device 200 lowers performance of a processor located near the temperature sensor 280J, to reduce power consumption and implement thermal protection. In some other embodiments, when the temperature is less than another threshold, the electronic device 200 heats the battery 242, to avoid a case in which the electronic device 200 is shut down abnormally due to a low temperature. In some other embodiments, when the temperature is lower than still another threshold, the electronic device 200 boosts an output voltage of the battery 242 to avoid abnormal shutdown caused by a low temperature.

The touch sensor 280K is also referred to as a "touch device". The touch sensor 280K may be disposed in the display 294, and the touch sensor 280K and the display 294 form a touchscreen, which is also referred to as a "touchscreen". The touch sensor 280K is configured to detect a touch operation performed on or near the touch sensor 280K. The touch sensor may transfer the detected touch operation to the application processor to determine a type of the touch event. A visual output related to the touch operation may be provided by using the display 294. In some other embodiments, the touch sensor 280K may alternatively be disposed on a surface of the electronic device 200, or disposed in a position different from the display 294.

The bone conduction sensor 280M may obtain a vibration signal. In some embodiments, the bone conduction sensor 280M may obtain a vibration signal of a vibration bone of a human vocal-cord part. The bone conduction sensor 280M may also contact a pulse of a human body and receive a blood pressure pulse signal. In some embodiments, the bone conduction sensor 280M may also be disposed in the headset, to combine into a bone conduction headset. The audio module 270 may obtain a voice signal through parsing based on the vibration signal that is of the vibration bone of the vocal-cord part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button, or may be a touch button. The electronic device 200 may receive a button input, and generate a button signal input related to a user setting and function control of the electronic device 200.

The motor 291 may generate a vibration prompt. The motor 291 may be configured to provide an incoming call vibration prompt and a touch vibration feedback. For example, touch operations performed on different applications (such as a photographing application and an audio playing application) may correspond to different vibration feedback effects. The motor 291 may also generate different vibration feedback effects for touch operations performed on different areas of the display 294. Different application scenarios (for example, time reminding, information receiving, an alarm clock, and a game) may also correspond to different vibration feedback effects. A touch vibration feedback effect may further be customized.

The indicator 292 may be an indicator light, may be configured to indicate a charging status and a battery level change, and may also be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The plurality of cards may be of a same type or different types. The SIM card interface 295 may also be compatible with different types of SIM cards. The SIM card interface 295 is also compatible to an external storage card. The electronic device 200 interacts with a network by using the SIM card, to implement a call function, a data communication function, and the like. In some embodiments, the electronic device 200 uses an eSIM, namely, an embedded SIM card. The eSIM card may be embedded into the electronic device 200, and cannot be separated from the electronic device 200.

It may be understood that the structure shown in embodiments of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The following describes, in detail with reference to the power line communication system shown in FIG. 1, the electronic device shown in FIG. 2, and a specific application scenario, the power line communication method provided in embodiments of this application.

### 1. Initialization of parameters

In an initialization phase, the primary routing device may determine a transmission management cycle and a windowing manner in response to a configuration operation of an administrator (namely, a device vendor or a user).

The transmission management cycle may be understood as a cycle in which the primary routing device manages a transmission opportunity of each routing device.

In each transmission management cycle, the primary routing device may configure a transmission opportunity of each routing device and a transmission sequence of all routing devices, and notify each secondary routing device by using an index frame (MAP frame).

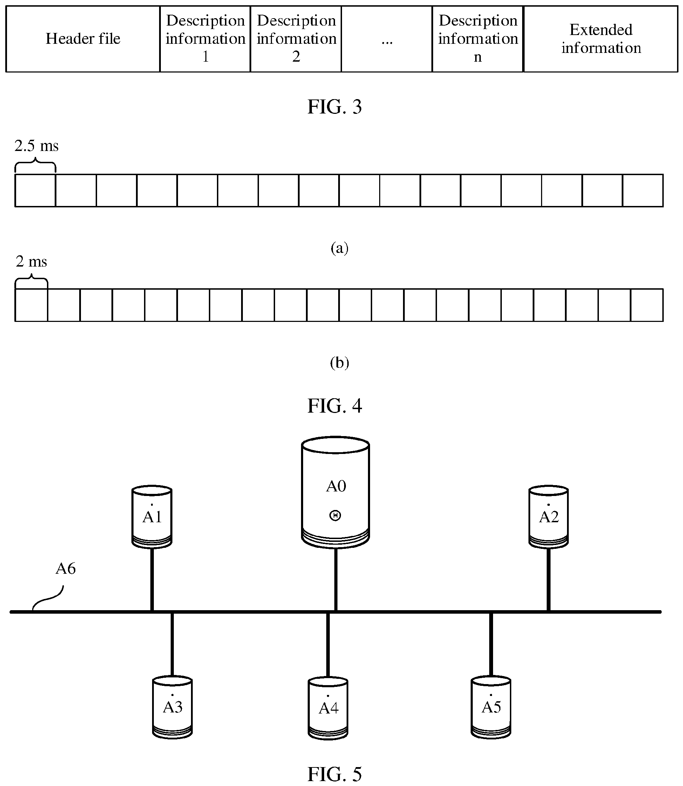

A structure of the MAP frame may be set according to an actual requirement. For example, as shown in FIG. 3, the structure of the MAP frame may include a header file, configuration information, and extension information. The configuration information may include at least one piece of description information, for example, description information 1, description information 2, and description information n (n is a positive integer greater than 2). The foregoing description information is used to record information such as a device identifier and a transmission sequence of a routing device allocated with a transmission opportunity.

When the secondary routing device receives the MAP frame, the secondary routing device may obtain a transmission opportunity and a transmission sequence of each routing device from the MAP frame.

When a next transmission management cycle arrives, routing devices configured with transmission opportunities may sequentially perform data transmission according to the foregoing transmission sequence, and a routing device not configured with a transmission opportunity may not perform data transmission.

For example, it is assumed that a primary routing device, a secondary routing device A, a secondary routing device B, and a secondary routing device C all access a power line network.

In a transmission management cycle, the primary routing device configures a transmission opportunity and a transmission sequence of the primary routing device, the secondary routing device A, and the secondary routing device B by using the MAP frame, and does not configure a transmission opportunity of the secondary routing device C.

When the next transmission management cycle arrives, the primary routing device, the secondary routing device A, and the secondary routing device B may sequentially perform data transmission according to the foregoing transmission sequence. The secondary routing device C is not configured with the transmission opportunity. Therefore, the secondary routing device C cannot perform data transmission.

In addition, one transmission management cycle may include one or more alternating current cycles. The alternating current cycle may be calculated based on a frequency of the alternating current.

For example, it is assumed that the frequency of the alternating current is 50 Hz, and one alternating current cycle is 20 ms. In this case, if the transmission management cycle includes one alternating current cycle, the transmission management cycle is 20 ms; or if the transmission management cycle includes two alternating current cycles, the transmission management cycle is 20 x 2 = 40 ms.

It is assumed that the frequency of the alternating current is 60 Hz, and one alternating current cycle is about 16.7 ms. In this case, if the transmission management cycle includes one alternating current cycle, the transmission management cycle is approximately 16.7 ms; or if the transmission management cycle includes two alternating current cycles, the transmission management cycle is approximately 16.7 x 2 = 33.4 ms.

The windowing manner is a manner of dividing an alternating current cycle. To improve anti-interference performance, the primary routing device may divide an alternating current cycle into a plurality of time windows in the foregoing windowing manner, and set different channel parameters in each time window.

In a same time window, a plurality of routing devices may transmit different packet frames. However, because different channel parameters are set for different time windows, a same frame packet can be transmitted only in one time window, and cannot be transmitted across a plurality of time windows.

The foregoing windowing manner may be set according to an actual requirement. For example, it is assumed that one transmission management cycle includes two alternating current cycles, and each alternating current cycle is 20 ms.

In this case, as shown in a scenario in (a) in FIG. 4, if each alternating current cycle is divided into eight time windows, the transmission management cycle may include 16 time windows, and each time window is 2.5 ms.

As shown in a scenario in (b) in FIG. 4, if each alternating current cycle is divided into 10 time windows, the transmission management cycle may include 20 time windows, and each time window is 2 ms.

### 2. Obtaining of a device access status

When the primary routing device enters a working state, the primary routing device may obtain, through a status transmission channel, a device access status of each secondary routing device that accesses the power line network.

The status transmission channel may include one or more of communication connections such as a power line network, a Wi-Fi connection, a Bluetooth connection, a USB connection, and an RJ45 connection.

The device access status indicates whether user equipment accesses the secondary routing device. The device access status may include a state of being accessed by user equipment and a state of no user equipment access.

The device access status may be represented by one or a combination of a plurality of representation elements such as a number, a character, and a punctuation mark.

For example, in some scenarios, the electronic device may use 1 to indicate that user equipment accesses the electronic device, and use 0 to indicate that no user equipment accesses the electronic device. In some other scenarios, the electronic device may alternatively use a-1 to indicate that user equipment accesses the electronic device, and use b-9 to indicate that no user equipment accesses the electronic device. In some other scenarios, the electronic device may alternatively indicate a device access status in another form. A specific representation form of the device access status is not limited in embodiments of this application.

In addition, the device access status may be requested by the primary routing device from the secondary routing device, or the device access status may be actively sent by the secondary routing device to the primary routing device.

For example, in some scenarios, the primary routing device may send an access status request to the secondary routing device. After receiving the access status request, the secondary routing device may respond to the access status request, and feed back the device access status of the secondary routing device to the primary routing device.

In some other scenarios, the secondary routing device may actively send the device access status of the secondary routing device to the primary routing device when discovering the primary routing device.

A specific manner in which the primary routing device obtains the device access status of the secondary routing device is not limited in embodiments of this application.

### 3. Dynamic configuration of a transmission opportunity

After obtaining the device access status of the secondary routing device, the primary routing device may allocate a transmission opportunity to the secondary routing device based on the device access status of the secondary routing device.

If the device access status of the secondary routing device is the state of being accessed by user equipment, it indicates that the secondary routing device may have service data to be transmitted. In this case, the primary routing device may determine the secondary routing device as an active device.

If the device access status of the secondary routing device is the state of no user equipment access, it indicates that the secondary routing device is in an idle state and no service data needs to be transmitted. In this case, the primary routing device may determine the secondary routing device as an idle device.

Then, the primary routing device may allocate a transmission opportunity in a first time segment of the transmission management cycle to the primary routing device and the active device, set a first transmission sequence of the primary routing device and the active device, and not allocate a transmission opportunity in the first time segment to an idle device.

In addition, the primary routing device may further allocate a transmission opportunity in a second time segment of the transmission management cycle to the primary routing device, the active device, and the idle device, and set a second transmission sequence of the primary routing device, the active device, and the idle device.

The first time segment and the second time segment are non-intersecting time segments. The first time segment and the second time segment may be set according to an actual requirement.

Specifically, in some embodiments, the first time segment and the second time segment may be preset fixed time segments.

For example, it is assumed that one transmission management cycle includes 20 time windows. In some scenarios, the primary routing device may fixedly set the first time window to the thirteenth time window in the transmission management cycle as the first time segment, fixedly set the fourteenth time window as a time segment for transmitting the MAP frame, and fixedly set the fifteenth time window to the twentieth time window as the second time segment.

In some other scenarios, the primary routing device may fixedly set the first time window to the ninth time window in the transmission management cycle as the first time segment, fixedly set the tenth time window as a time segment for transmitting the MAP frame, and fixedly set the eleventh time window to the twentieth time window as the second time segment.

In some other embodiments, the first time segment and the second time segment may alternatively be dynamically adjusted time segments.

In this case, the primary routing device may calculate, based on a quantity of idle devices, a theoretical minimum bandwidth of the idle device corresponding to a case in which different quantities of time windows are set in the second time segment. A manner of calculating the theoretical minimum bandwidth may be determined based on an actual scenario. A specific manner of calculating the theoretical minimum bandwidth is not limited in embodiments of this application.

Then, the primary routing device may set the first time segment and the second time segment when the theoretical minimum bandwidth of the idle device satisfies the basic overhead of the idle device.

For example, in some scenarios, it is assumed that one transmission management cycle includes 16 time windows. When the primary routing device calculates that three time windows are set in the second time segment, the theoretical minimum bandwidth of the idle device is greater than the basic overhead of the idle device.

In this case, the primary routing device may randomly select three time windows from the 16 time windows as the second time segment, randomly select one time window as a time segment for transmitting the MAP frame, and determine another time window as the first time segment.

In some other scenarios, it is assumed that one transmission management cycle includes 20 time windows. When the primary routing device calculates that four time windows are set in the second time segment, the theoretical minimum bandwidth of the idle device is greater than the basic overhead of the idle device.

In this case, when a specified margin is reserved, the primary routing device may determine the first time window to the fifth time window in the transmission management cycle as the second time segment, determine the sixth time window as a time segment for transmitting the MAP frame, and determine the seventh time window to the twentieth time window as the first time segment.

In some other scenarios, the primary routing device may also set the first time segment and the second time segment in another manner. A specific manner of setting the first time segment and the second time segment is not limited in embodiments of this application.

In addition, a manner of generating the foregoing transmission sequence may be set according to an actual requirement.

For example, in some embodiments, the primary routing device may sort the device identifiers of the routing devices in a random sorting manner, to obtain a transmission sequence. In some other embodiments, the primary routing device may sort device identifiers of routing devices according to any one or a combination of sorting rules such as a descending order of digits, an ascending order of digits, a descending order of letters, and an ascending order of letters, starting from a first digit of the device identifiers, to obtain a transmission sequence. In some other embodiments, the primary routing device may also generate the transmission sequence in another manner. A specific manner in which the primary routing device generates the transmission sequence is not limited in embodiments of this application.

In addition, when the primary routing device generates the second transmission sequence, the primary routing device may directly generate the second transmission sequence in the foregoing generation manner.

Alternatively, the primary routing device may first arrange the device identifiers of the idle devices, and then arrange the device identifiers of the primary routing device and the active device, so that the idle devices can preferentially have a transmission opportunity in the second time segment, thereby ensuring a bandwidth of the idle devices.

For example, it is assumed that the secondary routing device A is an idle device, and the secondary routing device B and the secondary routing device C are active devices. When generating the second transmission sequence, the primary routing device may first arrange the secondary routing device A. Then, the primary routing device sorts the primary routing device, the secondary routing device B, and the secondary routing device C after the secondary routing device A, to obtain the second transmission sequence. In this case, the second transmission sequence may be: secondary routing device A-secondary routing device C-primary routing device-secondary routing device B.

After configuring the transmission opportunity and the transmission sequence of each routing device, the primary routing device may broadcast the MAP frame in the power line network, and notify each secondary routing device of the configuration situation of the transmission opportunity and the transmission sequence by using the MAP frame.

When the secondary routing device receives the MAP frame, the secondary routing device may determine a transmission opportunity and a transmission sequence of the device by using the MAP frame.

When a next transmission management cycle arrives, the primary routing device and the active device may sequentially perform data transmission in the first time segment according to the first transmission sequence.

In addition, the primary routing device, the active device, and the idle device may sequentially perform data transmission in the second time segment according to the second transmission sequence.

For example, refer to FIG. 5. It is assumed that the power line communication system includes a primary routing device A0, a secondary routing device A1, a secondary routing device A2, a secondary routing device A3, a secondary routing device A4, a secondary routing device A5, and a power line network A6.

The primary routing device A0, the secondary routing device A1, the secondary routing device A2, the secondary routing device A3, the secondary routing device A4, and the secondary routing device A5 all access the power line network A6.

In some power line communication methods, regardless of whether a secondary routing device has data to be transmitted, the primary routing device A0 equally allocates a transmission opportunity to each routing device.

It is assumed that only the primary routing device A0 needs to transmit downlink data, and the secondary routing devices do not need to transmit data. In this case, the transmission sequence generated by the primary routing device A0 may be A1-A2-A3-A4-A5-A0.

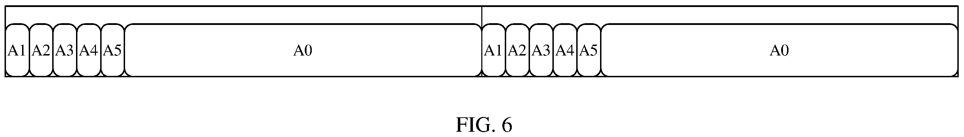

Refer to FIG. 6. In FIG. 6, a right-angled rectangle represents a time window, and a rounded rectangle represents a time slot occupied by each routing device. FIG. 6 schematically lists a distribution diagram of time slots occupied by routing devices in two time windows.

As shown in FIG. 6, in a transmission management cycle, the primary routing device A0 and each secondary routing device may sequentially have a transmission opportunity according to the foregoing transmission sequence.

When it is the turn of a transmission opportunity of a routing device, if the routing device needs to transmit data, the routing device may use the transmission opportunity to perform data transmission.

If the routing device does not transmit data, the routing device may remain silent. In this case, after waiting for a minimum transmission time slot, another routing device may consider by default that the routing device abandons the current transmission opportunity, and continues to turn to a transmission opportunity of a next routing device.

Therefore, although each secondary routing device does not need to transmit data, in each time window, the primary routing device A0 needs to wait for five minimum transmission time slots before performing data transmission of the device.

In other words, in each time window, bandwidths corresponding to five minimum transmission time slots are wasted.

It is assumed that one transmission management cycle includes 20 time windows, duration of each time window is 2 ms, and a minimum transmission time slot is 35.84 µs, a proportion of a wasted bandwidth is (35.84 x 5)/2000 = 8.96%.

In addition, as a quantity of secondary routing devices increases, a proportion of the wasted bandwidth increases accordingly. When a quantity of the secondary routing devices increases to 15, a minimum quantity of wasted transmission time slots in each time window increases to 15, and a proportion of the wasted bandwidth is (35.84 x 15)/2000 = 26.88%.

In the power line communication method provided in embodiments of this application, it is assumed that the first 13 time windows of the transmission management cycle are a first time segment, the fourteenth time window is a time segment for transmitting a MAP frame, the fifteenth time window to the twentieth time window are a second time segment, and no user equipment accesses each secondary routing device.

After the primary routing device A0 enters the working state, the primary routing device A0 may obtain a device access status of each secondary routing device.

In this case, device access statuses fed back by the secondary routing device A1, the secondary routing device A2, the secondary routing device A3, the secondary routing device A4, and the secondary routing device A5 to the primary routing device A0 are all that no user equipment accesses.

Therefore, the primary routing device A0 may determine the secondary routing device A1, the secondary routing device A2, the secondary routing device A3, the secondary routing device A4, and the secondary routing device A5 as idle devices.

Then, the primary routing device A0 may allocate a transmission opportunity in the first time segment to the primary routing device A0 not to other secondary routing devices, and set the first transmission sequence to A0.

In addition, the primary routing device A0 may allocate a transmission opportunity in the second time segment to the primary routing device A0, the secondary routing device A1, the secondary routing device A2, the secondary routing device A3, the secondary routing device A4, and the secondary routing device A5, and set the second transmission sequence to A1-A2-A3-A4-A5-A0.

Then, the primary routing device A0 may broadcast a MAP frame on the power line network, and notify each secondary routing device of the configuration situation of the transmission opportunity and the transmission sequence by using the MAP frame.

After receiving the MAP frame, each secondary routing device may determine a transmission opportunity and a transmission sequence of the device by using the MAP frame.

When the next transmission management cycle arrives, the primary routing device A0 and each secondary routing device perform data transmission based on the transmission opportunities and the transmission sequence.

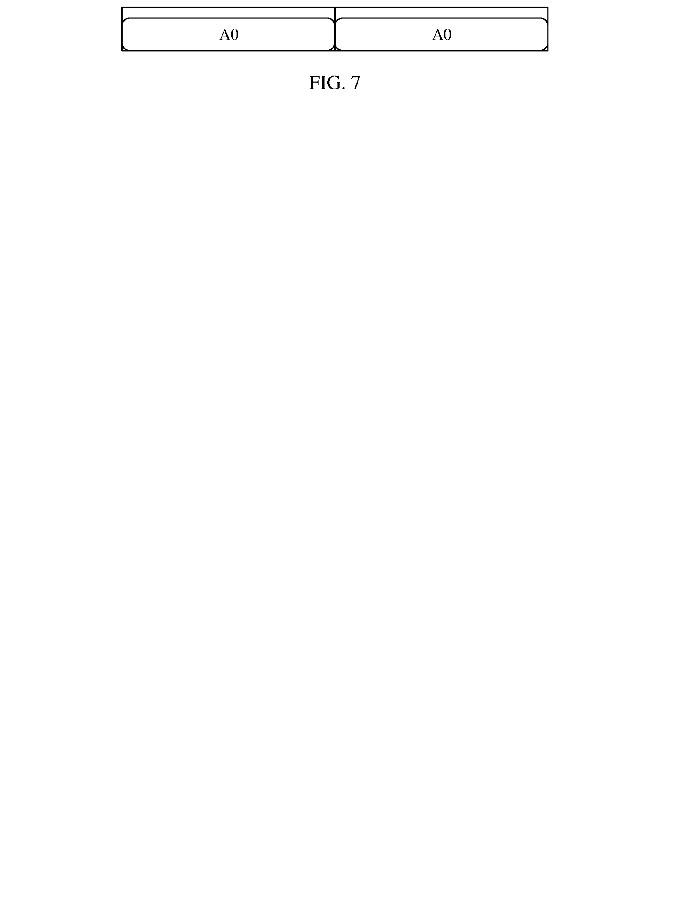

Refer to FIG. 7. FIG. 7 shows an example of a distribution diagram of time slots occupied by all routing devices in two time windows of the first time segment.

As shown in FIG. 7, in the first time segment of the transmission management cycle, in each time window, only the primary routing device A0 performs data transmission, and the primary routing device A0 does not need to wait for a time slot of another secondary routing device.

In other words, compared with the foregoing power line communication method, the method in this embodiment of this application can save five wasted minimum transmission time slots in each time window of the first time segment, thereby improving bandwidth utilization by 8.96%.

In addition, as a quantity of secondary routing devices increases, bandwidth utilization saved by using the method in this embodiment of this application may be further improved. When the quantity of secondary routing devices is increased to 15, according to the method in this embodiment of this application, 15 wasted minimum transmission time slots can be saved in each time window of the first time segment, thereby improving bandwidth utilization by 26.88%.

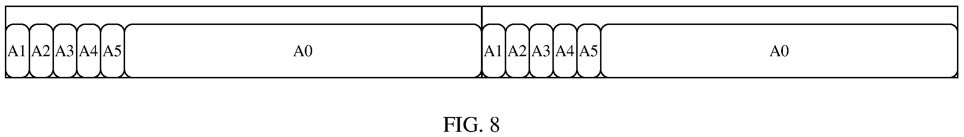

Refer to FIG. 8. FIG. 8 shows an example of a distribution diagram of time slots occupied by all routing devices in the two time windows of the second time segment.

As shown in FIG. 8, in the second time segment of the transmission management cycle, the primary routing device A0 and each secondary routing device may sequentially perform data transmission according to the second transmission sequence, to meet the basic overhead required by each idle device to transmit a small quantity of management packets.

In this case, the first time segment and the second time segment are combined. When a quantity of secondary routing devices is 5, bandwidth utilization improved by using the method provided in this embodiment of this application is [(35.84 x 5) x 13]/[2000 x (13 + 6)] = 6.13%.

When the quantity of secondary routing devices increases to 15, bandwidth utilization improved by the method provided in this embodiment of this application is [(35.84 x 15) x 13]/[2000 x (13 + 6)] = 18.39%.

In addition, refer to Table 1 and Table 2. Table 1 and Table 2 are experimental data obtained through testing by using the two power line communication methods under the conditions listed in the foregoing examples.

Table 1 is experimental data in the first power line communication method in this example.

**Table 1**

| Quantity of secondary routing devices | Total rate (unit: Mbit/s) | Bandwidth utilization |
|---|---|---|
| 1 | 947 | 69% |
| 3 | 880 | 64% |
| 7 | 774 | 56% |
| 15 | 630 | 45% |

Table 2 is experimental data in a power line communication method according to an embodiment of this application.

**Table 2**

| Quantity of secondary routing devices | Total rate (unit: Mbit/s) | Bandwidth utilization |
|---|---|---|
| 1 | 947 | 69% |
| 3 | 920 | 68% |
| 7 | 890 | 64% |
| 15 | 863 | 62% |

It can be learned from the foregoing experimental data that, compared with another power line communication method, the power line communication method provided in this embodiment of this application can effectively improve bandwidth utilization of the power line network.

In addition, as a quantity of secondary routing devices increases, bandwidth utilization improved by using the method provided in this embodiment of this application also increases accordingly. When the quantity of secondary routing devices increases to 15, the method provided in this embodiment of this application can improve bandwidth utilization of (62% - 45%) = 17%, and an improvement effect is obvious.

It can be learned from the foregoing example and the experimental data that, in the method provided in this embodiment of this application, the primary routing device may allocate a transmission opportunity not in the first time segment but in the second time segment to an idle device, to reduce transmission opportunities of the idle device, avoid wasting excessive time slots by the idle device, effectively improve bandwidth utilization of the power line network, and improve data transmission efficiency of each routing device.

### 4. Change of the device access status

In an actual application scenario, the user equipment may access the secondary routing device at any time, or disconnect from the secondary routing device.

Therefore, the device access status of the secondary routing device may be affected by the user equipment, that is, the device access status changes from a state of being accessed by user equipment to a state of no user equipment access, or from a state of no user equipment access to a state of being accessed by user equipment.

When the device access status of the secondary routing device changes, the secondary routing device may send a status change notification to the primary routing device through the status transmission channel.

When the primary routing device receives the status change notification, the primary routing device may determine the device access status of the secondary routing device based on the status change notification, and re-allocate a transmission opportunity to each routing device.

Specifically, when the device access status of the secondary routing device changes from the state of being accessed by user equipment to the state of no user equipment access, the primary routing device may determine the secondary routing device as an idle device, no longer allocate a transmission opportunity in the first time segment to the secondary routing device, and update the first transmission sequence of the primary routing device and the active device.

When the device access status of the secondary routing device changes from the state of no user equipment access to the state of being accessed by user equipment, the primary routing device may determine the secondary routing device as an active device, allocate a transmission opportunity in the first time segment to the secondary routing device, and update the first transmission sequence of the primary routing device and the active device.

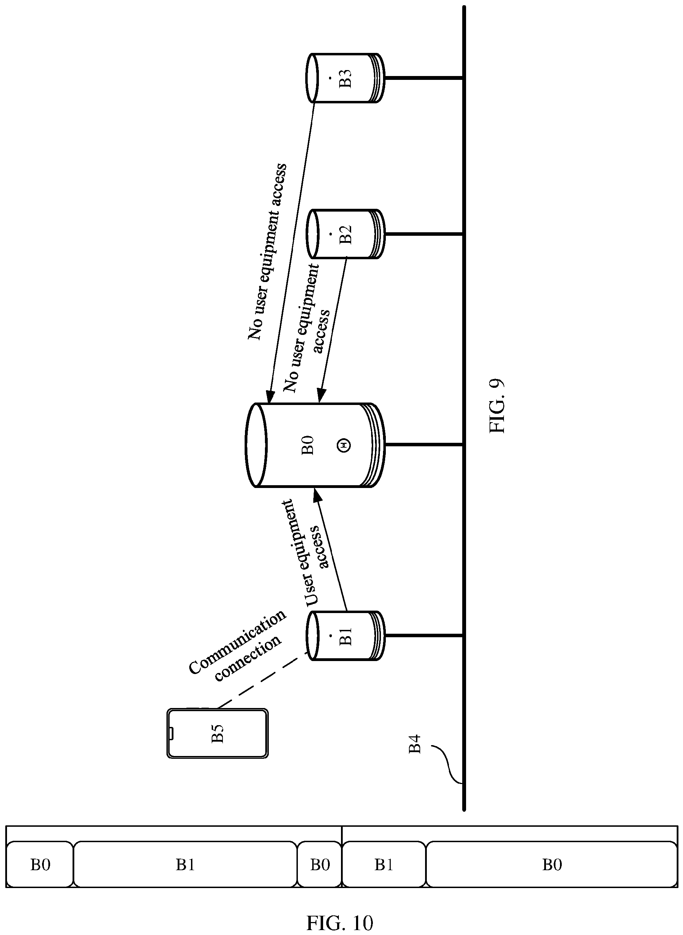

For example, as shown in FIG. 9, it is assumed that the power line communication system includes a primary routing device B0, a secondary routing device B 1, a secondary routing device B2, a secondary routing device B3, a power line network B4, and user equipment B5. The user equipment B5 establishes a communication connection with the secondary routing device B1.

At the first moment, the primary routing device B0 obtains a device access status of each secondary routing device. In this case, a device access status fed back by the secondary routing device B1 is a state of being accessed by user equipment, and both device access statuses fed back by the secondary routing device B2 and the secondary routing device B3 are a state of no user equipment access.

Therefore, the primary routing device B0 may allocate a transmission opportunity in a first time segment to the primary routing device B0 and the secondary routing device B1, and set a first transmission sequence to B0-B1.

In addition, the primary routing device B0 may allocate a transmission opportunity in a second time segment to the primary routing device B0, the secondary routing device B1, the secondary routing device B2, and the secondary routing device B3, and set a second transmission sequence to B0-B1-B2-B3.

Then, the primary routing device B0 may broadcast a MAP frame on the power line network, and notify each secondary routing device of a configuration situation of a transmission opportunity and a transmission sequence.

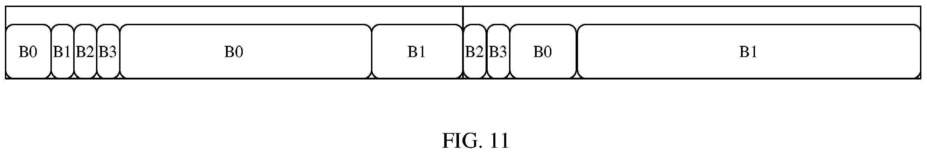

Refer to FIG. 10 and FIG. 11. In FIG. 10 and FIG. 11, a right-angled rectangle represents a time window, and a rounded rectangle represents a time slot occupied by each routing device.

When a first time segment of a next transmission management cycle arrives, as shown in FIG. 10, the primary routing device B0 and the secondary routing device B1 may perform data transmission in turn according to the first transmission sequence.

In this case, the primary routing device B0 may first start to perform data transmission according to the first transmission sequence; after the primary routing device B0 completes transmission, it is the turn of a transmission opportunity of the secondary routing device B1, and the secondary routing device B1 starts to perform data transmission; after the secondary routing device B1 completes transmission, it is the turn of a transmission opportunity of the primary routing device B0, and the primary routing device B0 starts to perform data transmission.

The primary routing device B0 and the secondary routing device B1 transmit data in turn according to the foregoing cyclic manner until the first time segment ends.

When it is the turn of a transmission opportunity of a routing device, if the routing device needs to transmit data, a length of a time slot occupied by the routing device at the current transmission opportunity is in a positive correlation relationship with a quantity of data that the routing device needs to transmit.

A larger amount of data that needs to be transmitted by the routing device indicates a longer packet sent by the routing device and a longer occupied time slot; and a smaller amount of data that needs to be transmitted by the routing device indicates a shorter packet sent by the routing device and a shorter occupied time slot.

In addition, because different channel parameters are set for different time windows, a same frame packet is allowed to be transmitted only in a same time window, and cannot be transmitted across a plurality of time windows.

That is, the longest length of the time slot occupied by the routing device at the current transmission opportunity is the length of the time window, and the time slot occupied by the routing device at the current transmission opportunity cannot cross different time windows.

In addition, each transmission opportunity has a minimum transmission time slot. Therefore, if the routing device has no data to be transmitted, or the routing device needs to transmit very little data, and duration used for transmission is less than the minimum transmission time slot, a time slot occupied by the routing device at the current transmission opportunity is a minimum transmission time slot.

When the second time segment arrives, as shown in FIG. 11, the primary routing device B0, the secondary routing device B1, the secondary routing device B2, and the secondary routing device B3 may perform data transmission in turn according to the second transmission sequence.

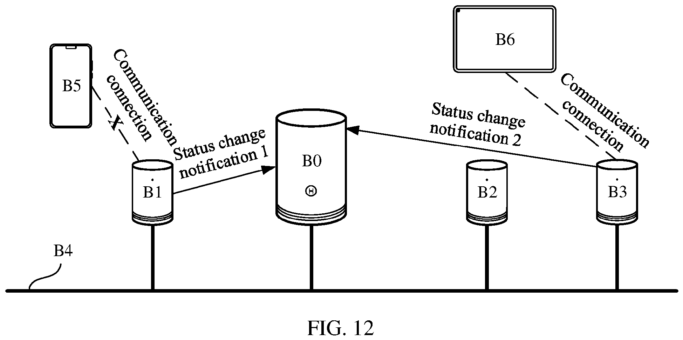

At a second moment, as shown in FIG. 12, user equipment B5 releases a communication connection with a secondary routing device B 1, and user equipment B6 establishes a communication connection with a secondary routing device B3.

In this case, the secondary routing device B1 sends a status change notification 1 to a primary routing device B0, and a secondary routing device B2 sends a status change notification 2 to the primary routing device B0.

After receiving the status change notification 1, the primary routing device B0 determines that a device access status of the secondary routing device B1 is changed to a state of no user equipment access, and no longer allocates a transmission opportunity in a first time segment to the secondary routing device B1.

After receiving the status change notification 2, the primary routing device B0 determines that a device access status of the secondary routing device B3 is changed to a state in which user equipment accesses the secondary routing device B3, and allocates a transmission opportunity in the first time segment to the secondary routing device B3.

Then, the primary routing device may update a first transmission sequence to B0-B3, and notify each secondary routing device of an updated transmission opportunity and transmission sequence by using a MAP frame.

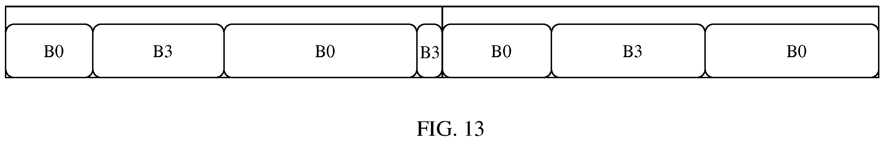

When a first time segment of a next transmission management cycle arrives, as shown in FIG. 13, the primary routing device B0 and the secondary routing device B3 may perform data transmission in turn according to the updated first transmission sequence.

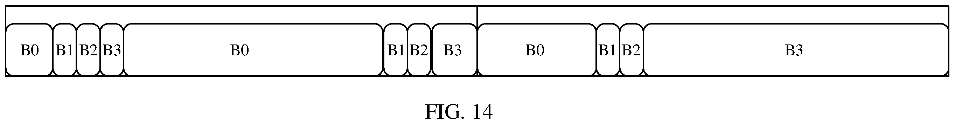

When a second time segment arrives, as shown in FIG. 14, the primary routing device B0, the secondary routing device B 1, the secondary routing device B2, and the secondary routing device B3 may continue to perform data transmission in turn according to a second transmission sequence that is not updated.

It can be learned from the foregoing example that, in the method provided in this embodiment of this application, when a device access status of a secondary routing device changes, the primary routing device may dynamically adjust a transmission opportunity of the secondary routing device according to a change status of the secondary routing device.

If the device access status of the secondary routing device changes from a state of being accessed by user equipment to a state of no user equipment access, the primary routing device may stop allocating a transmission opportunity in the first time segment to the secondary routing device, thereby reducing wasted time slots and improving bandwidth utilization.

If the device access status of the secondary routing device changes from the state of no user equipment access to the state of being accessed by user equipment, the primary routing device may allocate a transmission opportunity in the first time segment to the secondary routing device, thereby improving transmission efficiency of the secondary routing device.

### 5. Access and disconnection of a secondary routing device

In addition to the change of the device access status, the secondary routing device may also respond to an operation of a user, to access the power line network or disconnect from the power line network.

When a new secondary routing device accesses the power line network, the primary routing device may allocate a transmission opportunity in the transmission management cycle to the new secondary routing device.

In some possible implementations, when the primary routing device discovers a new secondary routing device, the primary routing device may set a device access status of the secondary routing device to a state of no user equipment access by default, and determine the secondary routing device as an idle device.

Then, the primary routing device may allocate a transmission opportunity not in the first time segment but in the second time segment to the secondary routing device, and update the second transmission sequence.

Then, if user equipment accesses the secondary routing device, the secondary routing device may send a status change notification to the primary routing device.

After receiving the status change notification, the primary routing device may determine, based on the status change notification, that the access status of the secondary routing device is a state of being accessed by user equipment, determine the secondary routing device as an active device, allocate a transmission opportunity in the first time segment to the secondary routing device, and update the first transmission sequence.

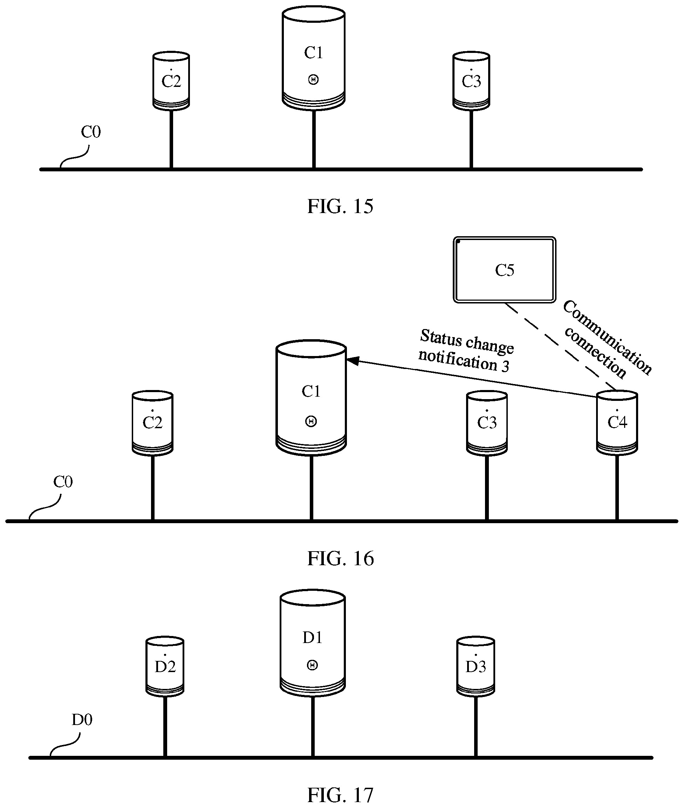

For example, as shown in FIG. 15, it is assumed that the power line communication system includes a power line network C0, a primary routing device C1, a secondary routing device C2, and a secondary routing device C3. No user equipment accesses the secondary routing device C2 and the secondary routing device C3.

At a third moment, the primary routing device C1 may allocate a transmission opportunity in a first time segment to the primary routing device C1, and set a first transmission sequence to C1.

In addition, the primary routing device C1 may allocate a transmission opportunity in a second time segment to the primary routing device C1, the secondary routing device C2, and the secondary routing device C3, and set a second transmission sequence to C2-C3-C1.

As shown in FIG. 16, at a fourth moment, the primary routing device C1 discovers that the secondary routing device C4 accesses the power line network C0. In this case, the primary routing device C1 may consider by default that the device access status of the secondary routing device C4 is that no user equipment accesses the primary routing device C4, allocate a transmission opportunity not in the first time segment but in the second time segment to the secondary routing device C4, and update the second transmission sequence to C2-C3-C4-C1.

In this case, because the user equipment C5 accesses the secondary routing device C4, the secondary routing device C4 may send a status change notification 3 to the primary routing device C1.

After receiving the status change notification 3, the primary routing device C1 determines that a device access status of the secondary routing device C4 is that user equipment accesses the primary routing device. Therefore, the primary routing device C1 may allocate a transmission opportunity in the first time segment to the secondary routing device C4, and update the first transmission sequence to C1-C4.

It can be learned from the foregoing example that, when the primary routing device finds that a new secondary routing device accesses the power line network, the primary routing device may consider the secondary routing device as an idle device by default, and allocate only a transmission opportunity in the second time segment to the secondary routing device, thereby reducing wasted time slots and improving bandwidth utilization of the power line network.

When the primary routing device receives the device change notification sent by the secondary routing device, the primary routing device may determine the secondary routing device as an active device, and allocate a transmission opportunity in the first time segment to the secondary routing device. This improves data transmission efficiency of the secondary routing device.

In some other possible implementations, when the primary routing device discovers a new secondary routing device, the primary routing device may consider by default that a device access status of the secondary routing device is that user equipment accesses the secondary routing device, and determine the secondary routing device as an active device.

Then, the primary routing device may allocate transmission opportunities in the first time segment and the second time segment to the secondary routing device, and update the first transmission sequence and the second transmission sequence.

Then, the primary routing device may wait for preset duration. The preset duration may be set according to an actual requirement. For example, the preset duration may be set to duration such as 1 minute, 5 minutes, or 10 minutes.

If the primary routing device receives, within the preset duration, a device access status sent by the secondary routing device, and the device access status is that user equipment accesses, the primary routing device may maintain a current configuration solution.

If the primary routing device does not receive, within the preset duration, the device access status sent by the secondary routing device, or the device access status received by the primary routing device is that a state of no user equipment access, the primary routing device may determine the secondary routing device as an idle device, stop allocating a transmission opportunity in the first time segment to the secondary routing device, and update the first transmission sequence.

For example, as shown in FIG. 17, it is assumed that the power line communication system includes a power line network D0, a primary routing device D 1, a secondary routing device D2, and a secondary routing device D3. No user equipment accesses the secondary routing device D2 and the secondary routing device D3.

At a fifth moment, the primary routing device D1 may allocate a transmission opportunity in a first time segment to the primary routing device D1, and set a first transmission sequence to D1.

In addition, the primary routing device D1 may allocate a transmission opportunity in a second time segment to the primary routing device D1, the secondary routing device D2, and the secondary routing device D3, and set a second transmission sequence to D2-D3-D1.

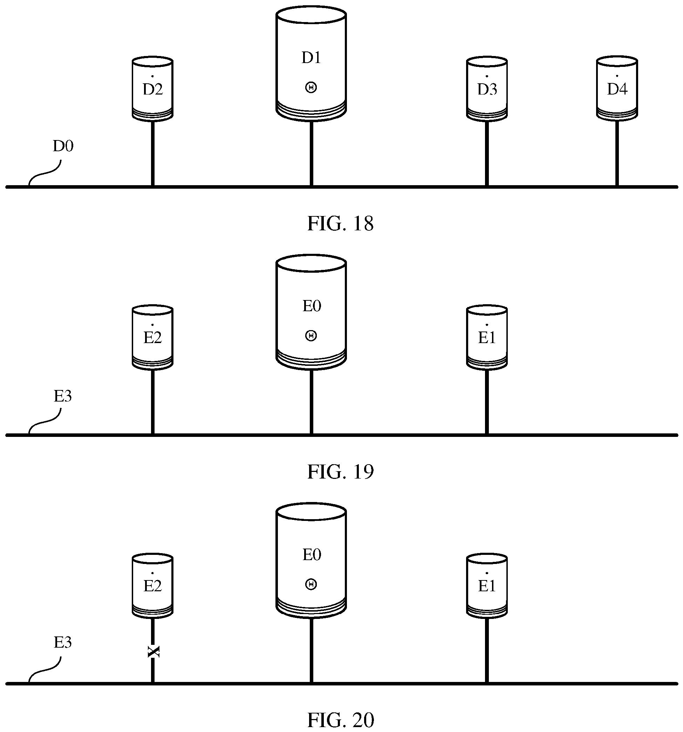

As shown in FIG. 18, at a sixth moment, the primary routing device D1 discovers that the secondary routing device D4 accesses the power line network D0. In this case, the primary routing device D1 may consider by default that the device access status of the secondary routing device D4 is a state of being accessed by user equipment, allocate transmission opportunities in the first time segment and the second time segment to the secondary routing device D4, update the first transmission opportunity to D1-D4, and update the second transmission sequence to D2-D3-D4-D 1.

In this case, because no user equipment accesses the secondary routing device D4, the secondary routing device D4 may not send the device access status of the device to the primary routing device D 1.

It is assumed that the preset duration is 10 minutes. After waiting for 10 minutes, the primary routing device D1 still does not receive the device access status sent by the secondary routing device D4. Therefore, the primary routing device D1 may determine that the device access status of the secondary routing device D4 is that no user equipment accesses the secondary routing device D4, no longer allocate a transmission opportunity in the first time segment to the secondary routing device D4, and update the first transmission sequence to D1.

It can be learned from the foregoing example that, when the primary routing device finds that a new secondary routing device accesses the power line network, the primary routing device may set the secondary routing device as an active device by default, and allocate transmission opportunities in the first time segment and the second time segment to the secondary routing device, so that the secondary routing device can provide a smooth data transmission service for the user equipment, thereby improving data transmission efficiency of the user equipment.

When the primary routing device finds that no user equipment accesses the secondary routing device, or the secondary routing device does not send a device access status within a timeout period, the primary routing device may determine the secondary routing device as an idle device, and no longer allocate a transmission opportunity in the first time segment to the secondary routing device, thereby reducing wasted time slots and improving bandwidth utilization.

In addition, when a secondary routing device disconnects from the power line network, the primary routing device may stop allocating a transmission opportunity to the secondary routing device, and update a transmission sequence.

If the secondary routing device is an active device, the primary routing device may stop allocating a transmission opportunity to the secondary routing device in the first time segment and the second time segment, and update the first transmission sequence and the second transmission sequence.

If the secondary routing device is an idle device, the primary routing device may stop allocating a transmission opportunity to the secondary routing device in the second time segment, and update the second transmission sequence.

For example, as shown in FIG. 19, it is assumed that the power line communication system includes a primary routing device E0, a secondary routing device E1, a secondary routing device E2, and a power line network E3. The primary routing device E0, the secondary routing device E1, and the secondary routing device E2 all access the power line network E3.

At a seventh moment, because no user equipment accesses the secondary routing device E1 and the secondary routing device E2, the primary routing device E0 determines the secondary routing device E1 and the secondary routing device E2 as idle devices.

Then, the primary routing device E0 may allocate a transmission opportunity in the first time segment to the device, and set the first transmission sequence to E0. In addition, the primary routing device may allocate a transmission opportunity in the second time segment to the primary routing device E0, the secondary routing device E1, and the secondary routing device E2, and set the second transmission sequence to E1-E2-E0.

At an eighth moment, as shown in FIG. 20, the secondary routing device E2 disconnects from the power line network E3.

After the primary routing device E0 finds that the secondary routing device E2 disconnects from the power line network, the primary routing device E0 may no longer allocate a transmission opportunity in the second time segment to the secondary routing device E2, and update the second transmission sequence to E1-E0.

It can be learned from the foregoing example that, when the primary routing device finds that the secondary routing device disconnects from the power line network, the primary routing device may no longer allocate a transmission opportunity to the secondary routing device, and update a transmission sequence. This reduces wasted time slots, and improves bandwidth utilization of the power line network.

The following describes the foregoing power line communication method in detail with reference to a specific application scenario.

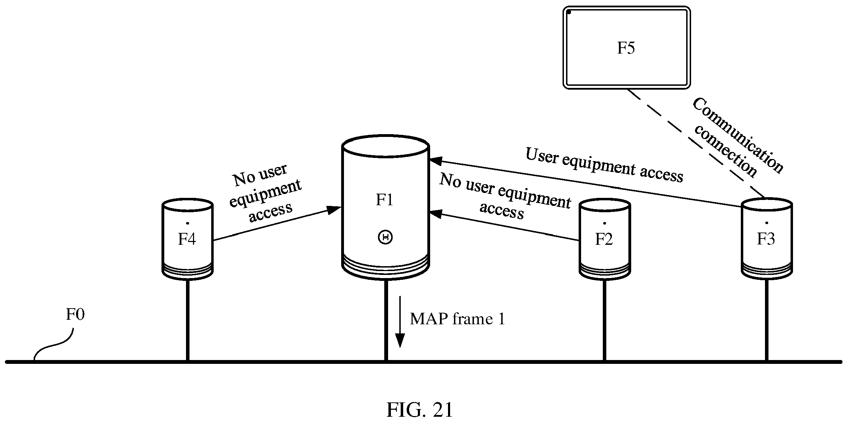

Refer to FIG. 21. In this example, a power line communication system includes a power line network F0, a primary routing device F1, a secondary routing device F2, a secondary routing device F3, a secondary routing device F4, and user equipment F5.

The primary routing device F1, the secondary routing device F2, the secondary routing device F3, and the secondary routing device F4 all access the power line network F0, and the user equipment F5 accesses the secondary routing device F3.

At a ninth moment, the primary routing device F1 enters a working state, and sends an access status request to the secondary routing device F2, the secondary routing device F3, and the secondary routing device F4.

In this case, because no user equipment accesses the secondary routing device F2 and the secondary routing device F4, and the user equipment F5 accesses the secondary routing device F3, a device access status fed back by the secondary routing device F2 and the secondary routing device F4 to the primary routing device F1 is a state of no user equipment access and the device access status fed back by the secondary routing device F3 to the primary routing device F1 is a state of being accessed by user equipment.

After receiving the device access status fed back by each secondary routing device, the primary routing device F1 may determine the secondary routing device F2 and the secondary routing device F4 as idle devices, and determine the secondary routing device F3 as an active device.

Then, the primary routing device F1 may allocate a transmission opportunity in the first time segment to the primary routing device F1 and the secondary routing device F3, and set the first transmission sequence to F1-F3; and the primary routing device F1 may allocate a transmission opportunity in the second time segment to the primary routing device F1, the secondary routing device F2, the secondary routing device F3, and the secondary routing device F4, and set the second transmission sequence to F1-F2-F3-F4.

Then, the primary routing device F1 may broadcast a MAP frame 1 on the power line network, and notify each secondary routing device of the configuration situation of the transmission opportunity and the transmission sequence by using the MAP frame 1.

After receiving the MAP frame 1, each secondary routing device may determine a transmission opportunity and a transmission sequence of the device by using the MAP frame 1.

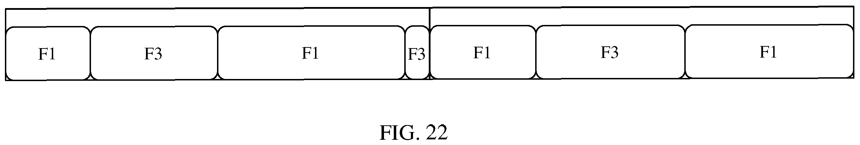

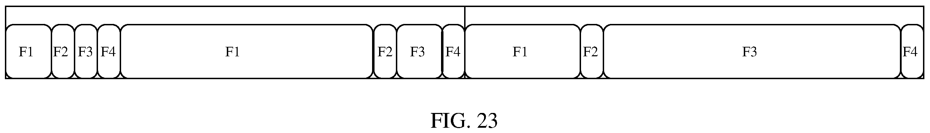

Refer to FIG. 22 and FIG. 23. In FIG. 22 and FIG. 23, a right-angled rectangle represents a time window, and a rounded rectangle represents a time slot occupied by each routing device.

When a first time segment of a next transmission management cycle arrives, as shown in FIG. 22, the primary routing device F1 and the secondary routing device F3 may perform data transmission in turn according to the first transmission sequence.

When a second time segment arrives, as shown in FIG. 23, the primary routing device F1, the secondary routing device F2, the secondary routing device F3, and the secondary routing device F4 may perform data transmission in turn according to the second transmission sequence.

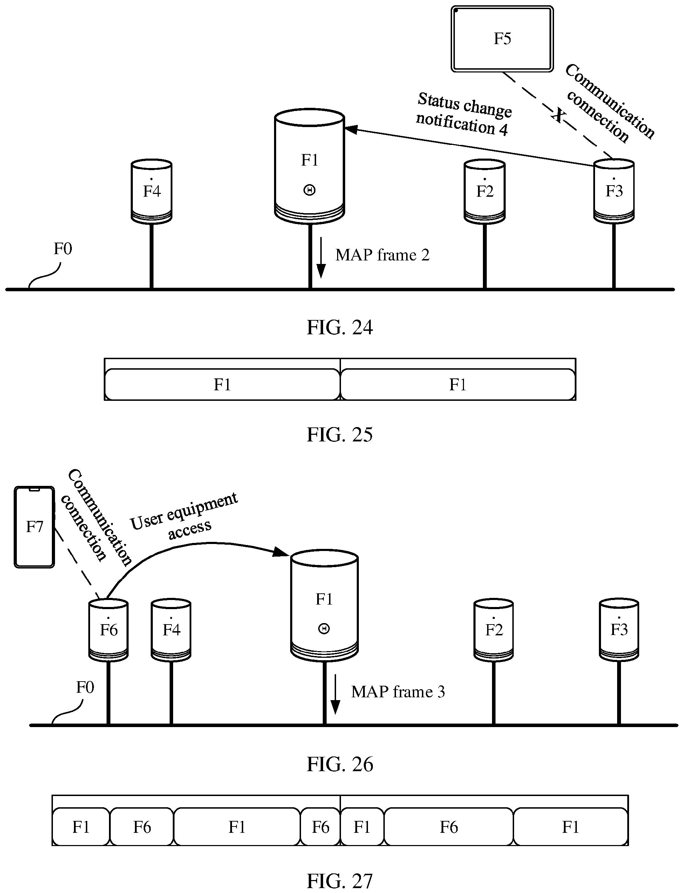

At a tenth moment, as shown in FIG. 24, the user equipment F5 disconnects from the secondary routing device F3. In this case, the secondary routing device F3 may send a status change notification to the primary routing device F1.

After receiving the status change notification, the primary routing device F1 determines that the device access status of the secondary routing device F3 is changed to a state of no user equipment access. Therefore, the primary routing device F1 may determine the secondary routing device F3 as an idle device, no longer allocate a transmission opportunity in the first time segment to the secondary routing device F3, and update the first transmission sequence to F1.

Then, the primary routing device F1 may broadcast a MAP frame 2 on the power line network, and notify each secondary routing device of an updated transmission opportunity and transmission sequence by using the MAP frame 2.

After receiving the MAP frame 2, each secondary routing device may determine a transmission opportunity and a transmission sequence of the device by using the MAP frame 2.

When a first time segment of a next transmission management cycle arrives, as shown in FIG. 25, only the primary routing device F1 may perform data transmission.

When a second time segment arrives, the primary routing device F1, the secondary routing device F2, the secondary routing device F3, and the secondary routing device F4 may perform data transmission in turn according to the second transmission sequence that is not updated.

At an eleventh moment, as shown in FIG. 26, the secondary routing device F6 accesses the power line network F0, and a communication connection is established between the secondary routing device F6 and the user equipment F7.

After discovering the secondary routing device F6, the primary routing device F1 may set the secondary routing device F6 as an active device by default, allocate transmission opportunities in the first time segment and the second time segment to the secondary routing device F6, update the first transmission sequence to F1-F6, and update the second transmission sequence to F1-F2-F3-F4-F6.

Then, the primary routing device F1 may broadcast a MAP frame 3 on the power line network, and notify each secondary routing device of an updated transmission opportunity and transmission sequence by using the MAP frame 3.

After receiving the MAP frame 3, each secondary routing device may determine a transmission opportunity and a transmission sequence of the device by using the MAP frame 3.

When a first time segment of a next transmission management cycle arrives, as shown in FIG. 27, the primary routing device F1 and the secondary routing device F6 may perform data transmission in turn according to the updated first transmission sequence.

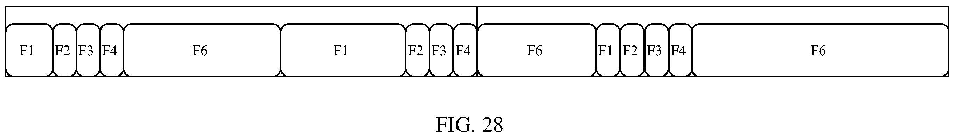

When a second time segment arrives, as shown in FIG. 28, the primary routing device F1, the secondary routing device F2, the secondary routing device F3, the secondary routing device F4, and the secondary routing device F6 may perform data transmission in turn according to the updated second transmission sequence.

In addition, after waiting for 2 minutes, the primary routing device F1 receives a device access status sent by the secondary routing device F6, where the device access status is a state of being accessed by user equipment.

Because 2 minutes is less than preset duration 5 minutes, and the device access status of the secondary routing device F6 is the state of being accessed by user equipment, the primary routing device F1 may continue to use the previously configured transmission opportunity and transmission sequence.

In conclusion, in the method provided in this embodiment of this application, the primary routing device may obtain a device access status of each secondary routing device, and determine whether a user accesses the secondary routing device.

If user equipment accesses the secondary routing device, the primary routing device may determine the secondary routing device as an active device, and allocate transmission opportunities in the first time segment and the second time segment to the secondary routing device, to ensure transmission efficiency of the secondary routing device.

If no user equipment accesses the secondary routing device, the primary routing device may determine the secondary routing device as an idle device, and allocate only a transmission opportunity not in the first time segment but in the second time segment to the secondary routing device, to reduce transmission opportunities in the idle device and avoid wasting excessive minimum transmission time slots by the idle device. This effectively improves bandwidth utilization of the power line network and improves a transmission speed.

When the device access status of the secondary routing device changes, the primary routing device may dynamically adjust the transmission opportunity of the secondary routing device according to the change of the secondary routing device.

If the device access status of the secondary routing device changes from a state of being accessed by user equipment to a state of no user equipment access, the primary routing device may stop allocating a transmission opportunity in the first time segment to the secondary routing device, thereby reducing wasted time slots and improving bandwidth utilization.

If the device access status of the secondary routing device changes from the state of no user equipment access to the state of being accessed by user equipment, the primary routing device may allocate a transmission opportunity in the first time segment to the secondary routing device, thereby improving transmission efficiency of the secondary routing device.

If a new secondary routing device accesses the power line network, the primary routing device may consider the secondary routing device as an idle device by default, and allocate only a transmission opportunity in the second time segment to the secondary routing device, thereby reducing wasted time slots and improving bandwidth utilization of the power line network.

Alternatively, the primary routing device may consider the secondary routing device as an active device by default, and allocate transmission opportunities in the first time segment and the second time segment to the secondary routing device, so that the secondary routing device can provide a smooth data transmission service for the user equipment, thereby improving data transmission efficiency of the user equipment.

When a secondary routing device disconnects from the power line network, the primary routing device may stop allocating a transmission opportunity to the secondary routing device, thereby reducing wasted time slots and improving bandwidth utilization of the power line network.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

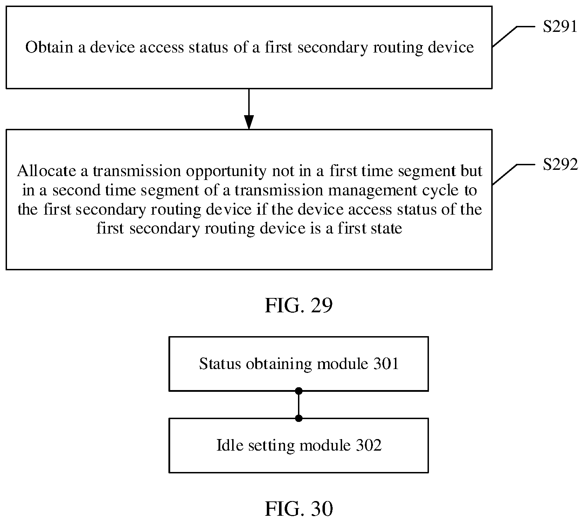

The following describes in detail, from a perspective of a primary routing device, another power line communication method provided in an embodiment of this application. Refer to FIG. 29. The power line communication method provided in this embodiment includes the following steps.

According to a first aspect, an embodiment of this application provides a power line communication method. The method is applied to a primary routing device, and includes:
S291: Obtain a device access status of a first secondary routing device.

It should be noted that the primary routing device is an electronic device that has a routing function and a management function. A secondary routing device is an electronic device that has a routing function but does not have a management function. The first secondary routing device may be understood as a secondary routing device that accesses a same power line network as the primary routing device.

After the primary routing device enters a working state, the device access status of the first secondary routing device may be obtained.

The device access status may be requested by the primary routing device from the first secondary routing device, or the device access status may alternatively be actively sent by the first secondary routing device to the primary routing device.

The device access status may include a first state or a second state. The first state indicates that user equipment accesses the first secondary routing device, and the second state indicates that no user equipment accesses the first secondary routing device.

The user equipment is an electronic device other than the primary routing device and the secondary routing device.

S292: Allocate a transmission opportunity not in a first time segment but in a second time segment of a transmission management cycle to the first secondary routing device if the device access status of the first secondary routing device is a first state.

The primary routing device and the first secondary routing device access a same power line network, the first state indicates that no user equipment accesses the first secondary routing device, and the first time segment and the second time segment are non-intersecting time segments.

It should be noted that, when a device status of the first secondary routing device is the first state, it indicates that no user equipment accesses the first secondary routing device, and the first secondary routing device has no service data to be transmitted.

In this case, the primary routing device may determine the first secondary routing device as an idle device, and allocate the transmission opportunity not in the first time segment but in the second time segment of the transmission management cycle to the first secondary routing device.

In other words, the primary routing device does not equally allocate transmission opportunities of the entire transmission management cycle to the first secondary routing device, but allocates transmission opportunities in only a part of time segments of the transmission management cycle to the first secondary routing device.

In the foregoing manner, the primary routing device may reduce transmission opportunities of the idle device, and reduce time slots wasted by the idle device. This improves bandwidth utilization of the power line network, and has relatively strong usability and practicability.

Optionally, after the obtaining a device access status of a first secondary routing device, the method further includes:
if the device access status of the first secondary routing device is a second state, allocating the transmission opportunity in the first time segment and the transmission opportunity in the second time segment to the first secondary routing device, where the second state indicates that user equipment accesses the first secondary routing device.

It should be noted that, when the device status of the first secondary routing device is the second state, it indicates that user equipment accesses the first secondary routing device, and the first secondary routing device may have service data to be transmitted.

In this case, the primary routing device may determine the first secondary routing device as an active device, and allocate the transmission opportunity in the first time segment and the transmission opportunity in the second time segment to the active device, to ensure transmission efficiency of the active device.

Optionally, after the allocating a transmission opportunity not in a first time segment but in a second time segment of a transmission management cycle to the first secondary routing device if the device access status of the first secondary routing device is a first state, the method further includes:
when a first status change notification sent by the first secondary routing device is received, allocating the transmission opportunity in the first time segment and the transmission opportunity in the second time segment to the first secondary routing device.

It should be noted that, in an actual application scenario, the user equipment may access or disconnect from the secondary routing device at any time.

Therefore, a device access status of the secondary routing device may be affected by the user equipment. To be specific, the device access status changes from the first state to the second state, or changes from the second state to the first state.

When the device access status of the secondary routing device changes, the secondary routing device may send a status change notification to the primary routing device, where the status change notification indicates that a device status of the secondary routing device changes.

Therefore, when the primary routing device receives the first status change notification sent by the first secondary routing device, it indicates that the device access status of the first secondary routing device changes from the first state to the second state.

In this case, to ensure transmission efficiency of the first secondary routing device, the primary routing device may allocate the transmission opportunity in the first time segment and the transmission opportunity in the second time segment to the first secondary routing device.

Optionally, after the allocating the transmission opportunity in the first time segment and the transmission opportunity in the second time segment to the first secondary routing device, the method further includes:
when a second status change notification sent by the first secondary routing device is received, stopping allocating the transmission opportunity in the first time segment to the first secondary routing device, and allocating the transmission opportunity in the second time segment to the first secondary routing device.

It should be noted that, when the primary routing device receives the second status change notification sent by the first secondary routing device, it indicates that the device access status of the first secondary routing device changes from the second state to the first state.

In this case, the first secondary routing device has no service data to be transmitted, and if the primary routing device continues allocating the transmission opportunity in the first time segment and the transmission opportunity in the second time segment to the first secondary routing device, a relatively large quantity of time slots may be wasted.

Therefore, the primary routing device may stop allocating the transmission opportunity in the first time segment to the first secondary routing device, allocate the transmission opportunity in the second time segment to the first secondary routing device, to reduce transmission opportunities of the first secondary routing device. This reduces wasted time slots and improves bandwidth utilization of the power line network.

Optionally, the foregoing method further includes:
when it is detected that a second secondary routing device accesses the power line network, allocating the transmission opportunity not in the first time segment but in the second time segment to the second secondary routing device.

It should be noted that, in addition to the device access status that may change, the secondary routing device may also access or disconnect from the power line network.

The second secondary routing device is a secondary routing device that newly accesses the power line network. When the primary routing device detects that the second secondary routing device accesses the power line network, because usually no user equipment accesses the secondary routing device that newly accesses the power line network, the primary routing device may consider the second secondary routing device as an idle device by default, and allocate the transmission opportunity not in the first time segment but in the second time segment to the second secondary routing device. This reduces wasted time slots and improves bandwidth utilization of the power line network.

Optionally, after the allocating the transmission opportunity not in the first time segment but in the second time segment to the second secondary routing device, the method further includes:
when a third status change notification sent by the second secondary routing device is received, allocating the transmission opportunity in the first time segment and the transmission opportunity in the second time segment to the second secondary routing device.

It should be noted that, when user equipment accesses the second secondary routing device, the second secondary routing device may send a third change notification to the primary routing device.

When the primary routing device receives the third change notification, the primary routing device may determine that the user equipment accesses the second secondary routing device, where the second secondary routing device is an active device.

In this case, the primary routing device may allocate the transmission opportunity in the first time segment and the transmission opportunity in the second time segment to the second secondary routing device, to ensure transmission efficiency of the second secondary routing device.

Optionally, the foregoing method further includes:
when it is detected that a second secondary routing device accesses the power line network, allocating the transmission opportunity in the first time segment and the transmission opportunity in the second time segment to the second secondary routing device; and
if a device access status of the second secondary routing device is not obtained within preset duration, or a device access status of the second secondary routing device is a third state, stopping allocating the transmission opportunity in the first time segment to the second secondary routing device, but allocating the transmission opportunity in the second time segment to the second secondary routing device, where the third state indicates that no user equipment accesses the second secondary routing device.

It should be noted that in some other scenarios, when the primary routing device detects that the second secondary routing device accesses the power line network, the primary routing device may also first allocate the transmission opportunity in the first time segment and the transmission opportunity in the second time segment to the second secondary routing device.

Then, the primary routing device waits for the preset duration. If the primary routing device does not receive the device access status of the second secondary routing device within the preset duration, or the device access status received by the primary routing device is the third state, the primary routing device may determine the second secondary routing device as an idle device, stop allocating the transmission opportunity in the first time segment to the second secondary routing device, but allocate the transmission opportunity in the second time segment to the second secondary routing device. This reduces transmission opportunities of the second secondary routing device, reduces wasted time slots, and improves bandwidth utilization of the power line network.

If the primary routing device receives the device access status of the second secondary routing device within the preset duration, and the device access status is a fourth state, it indicates that user equipment accesses the second secondary routing device.

In this case, the primary routing device may keep the previous configuration solution without changing.

Optionally, the foregoing method further includes:
when the first secondary routing device disconnects from the power line network, stopping allocating the transmission opportunity in the first time segment and the transmission opportunity in the second time segment to the first secondary routing device.

It should be noted that, when the primary routing device finds that the first secondary routing device disconnects from the power line network, it indicates that the first secondary routing device no longer performs data transmission by using the power line network. In this case, the primary routing device may stop allocating the transmission opportunity in the first time segment and the transmission opportunity in the second time segment to the first secondary routing device. This reduces invalid transmission opportunities, reduces wasted time slots, and improves bandwidth utilization of the power line network.

Optionally, S291 includes: obtaining the device access status of the first secondary routing device through a status transmission channel, where the status transmission channel includes one or more of the power line network, a Bluetooth connection, a Wi-Fi connection, a universal serial bus connection, and a network cable connection.

It should be noted that the primary routing device may obtain a device access status of each secondary routing device through the status transmission channel.

The status transmission channel may include one or more of the power line network, the Bluetooth connection, the Wi-Fi connection, the universal serial bus connection, and the network cable connection.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the power line communication method described in the foregoing embodiment, FIG. 30 is a block diagram of a structure of a power line communication apparatus according to an embodiment of this application. For ease of description, only a part related to this embodiment of this application is shown.

The apparatus may be applied to a primary routing device. Refer to FIG. 30. The apparatus includes:
a status obtaining module 301, configured to obtain a device access status of a first secondary routing device; and
an idle setting module 302, configured to: if the device access status of the first secondary routing device is a first state, allocate a transmission opportunity not in a first time segment but in a second time segment of a transmission management cycle to the first secondary routing device, where
the primary routing device and the first secondary routing device access a same power line network, the first state indicates that no user equipment accesses the first secondary routing device, and the first time segment and the second time segment are non-intersecting time segments.

Optionally, the apparatus further includes: an active setting module, configured to: if the device access status of the first secondary routing device is a second state, allocate the transmission opportunity in the first time segment and the transmission opportunity in the second time segment to the first secondary routing device, where the second state indicates that user equipment accesses the first secondary routing device.

Optionally, the apparatus further includes: a first change module, configured to: when a first status change notification sent by the first secondary routing device is received, allocate the transmission opportunity in the first time segment and the transmission opportunity in the second time segment to the first secondary routing device.

Optionally, the apparatus further includes: a second change module, configured to: when a second status change notification sent by the first secondary routing device is received, stop allocating the transmission opportunity in the first time segment to the first secondary routing device, but allocate the transmission opportunity in the second time segment to the first secondary routing device.

Optionally, the apparatus further includes: a first access module, configured to: when it is detected that a second secondary routing device accesses the power line network, allocate the transmission opportunity not in the first time segment but allocate in the second time segment to the second secondary routing device.

Optionally, the apparatus further includes: a third changing module, configured to: when a third status change notification sent by the second secondary routing device is received, allocate the transmission opportunity in the first time segment and the transmission opportunity in the second time segment to the second secondary routing device.

Optionally, the apparatus further includes:
a second access module, configured to: when it is detected that a second secondary routing device accesses the power line network, allocate the transmission opportunity in the first time segment and the transmission opportunity in the second time segment to the second secondary routing device; and
a fourth changing module, configured to: if a device access status of the second secondary routing device is not obtained within preset duration, or a device access status of the second secondary routing device is a third state, stop allocating the transmission opportunity in the first time segment to the second secondary routing device, but allocate the transmission opportunity in the second time segment to the second secondary routing device, where the third state indicates that no user equipment accesses the second secondary routing device.

Optionally, the apparatus further includes:
a device disconnecting module, configured to: when the first secondary routing device disconnects from the power line network, stop allocating the transmission opportunity in the first time segment and the transmission opportunity in the second time segment to the first secondary routing device.

Optionally, the status obtaining module 301 is specifically configured to obtain the device access status of the first secondary routing device through a status transmission channel, where the status transmission channel includes one or more of the power line network, a Bluetooth connection, a Wi-Fi connection, a universal serial bus connection, and a network cable connection.

A person of ordinary skill in the art may be aware that, in combination with the examples described in embodiments disclosed in this specification, units and algorithm steps may be implemented by electronic hardware or a combination of computer software and electronic hardware. Whether functions are performed in a hardware or software manner depends on particular applications and design constraint conditions of the technical solutions. A person skilled in the art may use different methods to implement the described functions for each particular application, but it should not be considered that the implementation goes beyond the scope of this application. In embodiments provided in this application, it should be understood that the disclosed apparatus/electronic device and method may be implemented in other manners. For example, the described apparatus/electronic device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments. In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated module/unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code. The computer program code may be in a source code form, an object code form, an executable file form, some intermediate forms, or the like. The computer-readable storage medium may include any entity or apparatus that can carry the computer program code, a recording medium, a USB flash drive, a removable hard disk, a magnetic disk, a compact disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal. Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A power line communication method, applied to a primary routing device, and comprising:
obtaining a device access status of a first secondary routing device; and
allocating a transmission opportunity not in a first time segment but in a second time segment of a transmission management cycle to the first secondary routing device if the device access status of the first secondary routing device is a first state, wherein
the primary routing device and the first secondary routing device access a same power line network, the first state indicates that no user equipment accesses the first secondary routing device, and the first time segment and the second time segment are non-intersecting time segments.

2. The method according to claim 1, wherein after the obtaining a device access status of a first secondary routing device, the method further comprises:
if the device access status of the first secondary routing device is a second state, allocating the transmission opportunity in the first time segment and the transmission opportunity in the second time segment to the first secondary routing device, wherein the second state indicates that user equipment accesses the first secondary routing device.

3. The method according to claim 1, wherein after the allocating a transmission opportunity not in a first time segment but in a second time segment of a transmission management cycle to the first secondary routing device if the device access status of the first secondary routing device is a first state, the method further comprises:
when a first status change notification sent by the first secondary routing device is received, allocating the transmission opportunity in the first time segment and the transmission opportunity in the second time segment to the first secondary routing device.

4. The method according to claim 2, wherein after the allocating the transmission opportunity in the first time segment and the transmission opportunity in the second time segment to the first secondary routing device, the method further comprises:
when a second status change notification sent by the first secondary routing device is received, stopping allocating the transmission opportunity in the first time segment to the first secondary routing device, and allocating the transmission opportunity in the second time segment to the first secondary routing device.

5. The method according to any one of claims 1 to 4, wherein the method further comprises:
when it is detected that a second secondary routing device accesses the power line network, allocating the transmission opportunity not in the first time segment but in the second time segment to the second secondary routing device.

6. The method according to claim 5, wherein after the allocating the transmission opportunity not in the first time segment but in the second time segment to the second secondary routing device, the method further comprises:
when a third status change notification sent by the second secondary routing device is received, allocating the transmission opportunity in the first time segment and the transmission opportunity in the second time segment to the second secondary routing device.

7. The method according to any one of claims 1 to 4, wherein the method further comprises:
when it is detected that a second secondary routing device accesses the power line network, allocating the transmission opportunity in the first time segment and the transmission opportunity in the second time segment to the second secondary routing device; and
if a device access status of the second secondary routing device is not obtained within preset duration, or a device access status of the second secondary routing device is a third state, stopping allocating the transmission opportunity in the first time segment to the second secondary routing device, but allocating the transmission opportunity in the second time segment to the second secondary routing device, wherein the third state indicates that no user equipment accesses the second secondary routing device.

8. The method according to any one of claims 1 to 7, wherein the method further comprises:
when the first secondary routing device disconnects from the power line network, stopping allocating the transmission opportunity in the first time segment and the transmission opportunity in the second time segment to the first secondary routing device.

9. The method according to any one of claims 1 to 8, wherein the obtaining a device access status of a first secondary routing device comprises:
obtaining the device access status of the first secondary routing device through a status transmission channel, wherein the status transmission channel comprises one or more of the power line network, a Bluetooth connection, a Wi-Fi connection, a universal serial bus connection, and a network cable connection.

10. A primary routing device, comprising a memory, a processor, and a computer program that is stored in the memory and that can be run on the processor, wherein when the processor is configured to execute the computer program, the method according to any one of claims 1 to 9 is implemented.

11. A computer-readable storage medium, wherein the computer-readable storage medium is configured to store a computer program, and when the computer program is executed by a processor, the method according to any one of claims 1 to 9 is implemented.

12. A computer program product, wherein when the computer program product is configured to run on a primary routing device, the primary routing device is enabled to perform the method according to any one of claims 1 to 9.

13. A chip system, wherein the chip system comprises a memory and a processor, and the processor is configured to execute a computer program stored in the memory, to implement the method according to any one of claims 1 to 9.
